# EUROPEAN PATENT APPLICATION

(11) **EP 4 718 819 A1**
(43) Date of publication of application: **01.04.2026**
(21) Application number: 25204120.7
(22) Date of filing: 23.09.2025
(51) Int. Cl.: H04L 67/02, G06F 16/955, G06Q 30/06, G06Q 30/0601

(54) **SAAS PROVIDING SYSTEM, SYSTEM, INFORMATION PROCESSING APPARATUS, AND SAAS PROVIDING PROGRAM**

(30) Priority: 26.09.2024 JP 2024167908
(71) Applicant: KYOCERA Document Solutions Inc., Osaka-shi, Osaka 540-8585 (JP)
(72) Inventor: Nagano, Daisaku, Osaka-shi, 540-8585 (JP)
(74) Representative: Plougmann Vingtoft a/s

(57) **Abstract**

A SaaS providing system (20) includes a SaaS providing unit that provides SaaS. In a case where an instruction to generate a purchaser tenant that serves as a tenant of a purchaser of the SaaS is provided from outside the SaaS providing system and a device ID that serves as identification information of an electronic apparatus that is used by the purchaser and utilizes the SaaS is notified (S132) from the outside, the SaaS providing unit generates (S133 and S134) the purchaser tenant in association with a vendor associated with the device ID notified from the outside in vendor/device association information that associates the vendor of the SaaS with the device ID.

## Description

### Incorporation by Reference

This application is based upon and claims the benefit of priority from the corresponding Japanese Patent Application No. 2024-167908 filed on September 26, 2024, the entire contents of which are incorporated herein by reference.

### Field

The present disclosure relates to a software as a service (SaaS) providing system that provides SaaS, a system, an information processing apparatus, and a SaaS providing program.

### Background

A cloud system utilized by a plurality of tenants is known as a SaaS providing system in the related art.

### Summary

A software as a service (SaaS) providing system according to the present disclosure includes a SaaS providing unit that provides SaaS, in which in a case where an instruction to generate a purchaser tenant that serves as a tenant of a purchaser of the SaaS is provided from outside the SaaS providing system and a device identifier (ID) that serves as identification information of an electronic apparatus that is used by the purchaser and utilizes the SaaS is notified from the outside, the SaaS providing unit generates the purchaser tenant in association with a vendor associated with the device ID notified from the outside in vendor/device association information that associates the vendor of the SaaS with the device ID.

In the SaaS providing system according to the present disclosure, in a case where the SaaS providing unit generates the purchaser tenant in association with the vendor, the SaaS providing unit may notify a manager of the purchaser tenant that the SaaS providing unit generates the purchaser tenant in association with the vendor.

A system according to the present disclosure includes: a software as a service (SaaS) providing system including a SaaS providing unit that provides SaaS; and an electronic apparatus that is used by a purchaser of the SaaS and utilizes the SaaS, in which the electronic apparatus instructs the SaaS providing system to generate a purchaser tenant that serves as a tenant of the purchaser and notifies the SaaS providing system of a device identifier (ID) that serves as identification information of the electronic apparatus itself, and in a case where an instruction to generate the purchaser tenant is provided from the electronic apparatus and the device ID is notified from the electronic apparatus, the SaaS providing unit generates the purchaser tenant in association with a vendor associated with the device ID notified from the electronic apparatus in vendor/device association information that associates the vendor of the SaaS with the device ID.

A system according to the present disclosure includes: a software as a service (SaaS) providing system including a SaaS providing unit that provides SaaS; an electronic apparatus that is used by a purchaser of the SaaS and utilizes the SaaS; and a purchaser terminal that is used by the purchaser, in which the electronic apparatus includes a device identifier (ID) that serves as identification information of the electronic apparatus in a uniform resource locator (URL) of a tenant generation site that serves as a web site for generating a purchaser tenant that serves as a tenant of the purchaser, the device ID being included as additional information, the purchaser terminal acquires the URL including the device ID from the electronic apparatus and accesses the URL acquired from the electronic apparatus, thereby instructing the SaaS providing system to generate the purchaser tenant via the tenant generation site and notifying the SaaS providing system of the device ID included in the URL, and in a case where an instruction to generate the purchaser tenant is provided from the purchaser terminal and the device ID is notified from the purchaser terminal, the SaaS providing unit generates the purchaser tenant in association with a vendor associated with the device ID notified from the purchaser terminal in vendor/device association information that associates the vendor of the SaaS with the device ID.

In the system according to the present disclosure, the electronic apparatus may display a screen with a code image as a screen including the code image that shows the URL including the device ID, and the purchaser terminal may acquire the URL shown by the code image by capturing the code image.

In the system according to the present disclosure, in a case where the screen with the code image is a screen related to a particular application of the SaaS, the electronic apparatus may include an application ID that serves as particular identification information of the application in the URL, the application ID being included as additional information, the purchaser terminal may acquire the URL including the device ID and the application ID from the electronic apparatus and access the URL acquired from the electronic apparatus, thereby instructing the SaaS providing system to generate the purchaser tenant via the tenant generation site and notifying the SaaS providing system of the device ID included in the URL and the application ID, and in a case where an instruction to generate the purchaser tenant is provided from the purchaser terminal and the device ID and the application ID are notified from the purchaser terminal, the SaaS providing unit may generate the purchaser tenant in association with the vendor and the application ID notified from the purchaser terminal, the vendor being associated with the device ID notified from the purchaser terminal in the vendor/device association information.

In the system according to the present disclosure, the purchaser terminal may acquire the URL including the device ID from the electronic apparatus by near field communication.

An information processing apparatus according to the present disclosure includes a software as a service (SaaS) providing unit that provides SaaS, in which in a case where an instruction to generate a purchaser tenant that serves as a tenant of a purchaser of the SaaS is provided from outside the information processing apparatus and a device identifier (ID) that serves as identification information of an electronic apparatus that is used by the purchaser and utilizes the SaaS is notified from the outside, the SaaS providing unit generates the purchaser tenant in association with a vendor associated with the device ID notified from the outside in vendor/device association information that associates the vendor of the SaaS with the device ID.

A software as a service (SaaS) providing program causes a computer to realize a SaaS providing unit that provides SaaS, in which in a case where an instruction to generate a purchaser tenant that serves as a tenant of a purchaser of the SaaS is provided from outside the computer and a device identifier (ID) that serves as identification information of an electronic apparatus that is used by the purchaser and utilizes the SaaS is notified from the outside, the SaaS providing unit generates the purchaser tenant in association with a vendor associated with the device ID notified from the outside in vendor/device association information that associates the vendor of the SaaS with the device ID.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### Brief Description of Figures

Fig. 1 is a diagram showing an example of a relationship between system users of a system according to a first embodiment of the present disclosure.
Fig. 2 is a block diagram of an example of the system according to the first embodiment of the present disclosure.
Fig. 3 is a block diagram of an example of a SaaS providing system in a case where it is constituted by a single computer shown in Fig. 2;
Fig. 4 is a diagram showing an example of tenant management information shown in Fig. 3;
Fig. 5 is a diagram showing an example of a relationship between tenants in the system shown in Fig. 2.
Fig. 6 is a diagram showing an example of tenant user management information shown in Fig. 3.
Fig. 7 is a diagram showing an example of device management information shown in Fig. 3.
Fig. 8 is a diagram showing an example of vendor/device association information shown in Fig. 3.
Fig. 9 is a block diagram of an example of an image forming apparatus shown in Fig. 2 in a case where it is constituted by an MFP.
Fig. 10 is a block diagram of an example of a vendor terminal shown in Fig. 2;
Fig. 11 is a block diagram of an example of a purchaser terminal shown in Fig. 2.
Fig. 12 is a block diagram of an example of an external system in a case where it is constituted by a single computer shown in Fig. 2.
Fig. 13 is a sequence diagram of an operation of the system shown in Fig. 2 in a case where a device ID is added to the vendor/device association information.
Fig. 14 is a sequence diagram of an operation of the system shown in Fig. 2 in a case where a purchaser tenant is generated via a tenant generation screen displayed by the image forming apparatus.
Fig. 15 is a sequence diagram of an operation of the system shown in Fig. 2 in a case where the purchaser tenant is generated via a tenant generation site accessed by the purchaser terminal by the purchaser terminal reading a code image that shows information including the URL of the tenant generation site.
Fig. 16 is a diagram showing an example of a screen with a code image, which is displayed in the operation shown in Fig. 15.
Fig. 17 is a sequence diagram of an operation of the system shown in Fig. 2 in a case where the purchaser tenant is generated via the tenant generation site accessed by the purchaser terminal by the purchaser terminal receiving the information including the URL of the tenant generation site by NFC.
Fig. 18 is a block diagram of an example of a system according to a second embodiment of the present disclosure.
Fig. 19 is a block diagram of an example of a SaaS providing system shown in Fig. 18 in a case where it is constituted by a single computer.
Fig. 20 is a diagram showing an example of tenant management information shown in Fig. 19.
Fig. 21 is a diagram showing an example of a relationship between tenants in the system shown in Fig. 18.
Fig. 22 is a diagram showing an example of vendor/device association information shown in Fig. 19.
Fig. 23 is a block diagram of an example of an external system in a case where it is constituted by a single computer shown in Fig. 18.
Fig. 24 is a sequence diagram of an operation of the system shown in Fig. 18 in a case where a device ID is added to the vendor/device association information.
Fig. 25 is a sequence diagram of an operation of the system shown in Fig. 18 in a case where the purchaser tenant is generated via the tenant generation screen displayed by the image forming apparatus.
Fig. 26 is a sequence diagram of an operation of the system shown in Fig. 18 in a case where the purchaser tenant is generated via the tenant generation site accessed by the purchaser terminal by the purchaser terminal reading the code image that shows the information including the URL of the tenant generation site.
Fig. 27 is a sequence diagram of an operation of the system shown in Fig. 18 in a case where the purchaser tenant is generated via the tenant generation site accessed by the purchaser terminal by the purchaser terminal receiving the information including the URL of the tenant generation site by NFC.

### Detailed Description

Hereinafter, embodiments of the present disclosure will be described with reference to the drawings.

### First Embodiment

First of all, a relationship between users of a system according to a first embodiment of the present disclosure (hereinafter, referred to as "system users") will be described.

For example, the system users of the system according to the present embodiment include a vendor that sells software as a service (SaaS) and a purchaser that has purchased the SaaS from the vendor. For example, subscription is the form of selling the SaaS by the vendor.

For example, the vendor of the SaaS may include a company that sells the SaaS and a dealer that is not the sales company.

For example, the sales company may include a regular distributor as a regular sales company and a general distributor that generally manages a plurality of regular distributors.

For example, the dealer may include a first-tier dealer that is directly managed by the sales company, a second-tier dealer managed by the first-tier dealer, and a third-tier dealer managed by the second-tier dealer.

The purchaser may be a corporation such as a company.

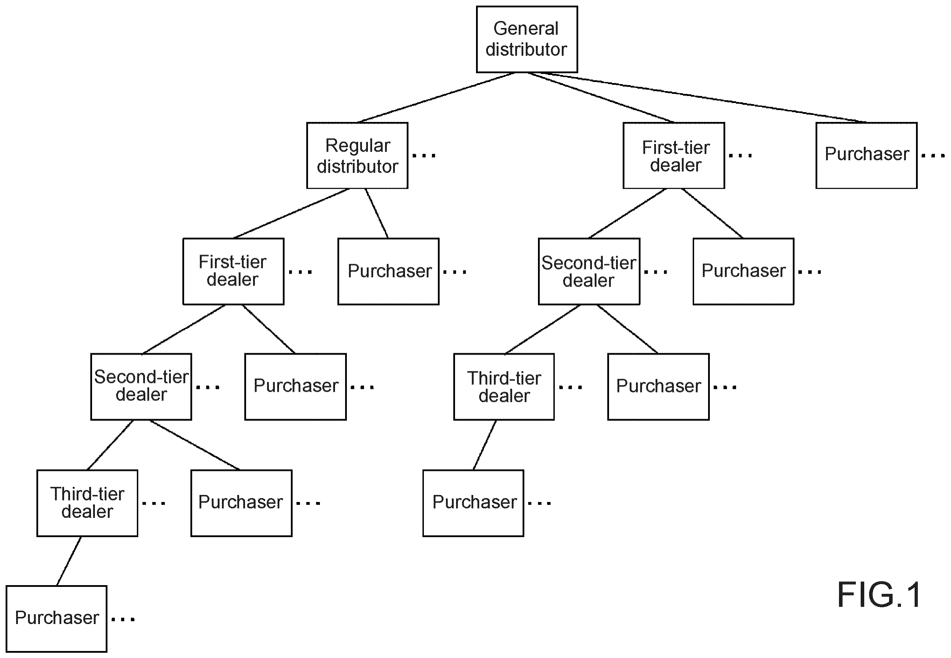

Fig. 1 is a diagram showing an example of a relationship between the system users of the system according to the present embodiment.

In the example shown in Fig. 1, the general distributor is at the highest level. The general distributor may directly manage at least one regular distributor. The general distributor may directly manage at least one first-tier dealer. The general distributor may directly manage at least one purchaser.

The regular distributor may directly manage the at least one first-tier dealer. The regular distributor directly manages the at least one purchaser.

The first-tier dealer may directly manage at least one second-tier dealer. The first-tier dealer directly manages the at least one purchaser.

The second-tier dealer may directly manage at least one third-tier dealer. The second-tier dealer directly manages the at least one purchaser.

The third-tier dealer directly manages the at least one purchaser.

Next, a configuration of the system according to the present embodiment will be described.

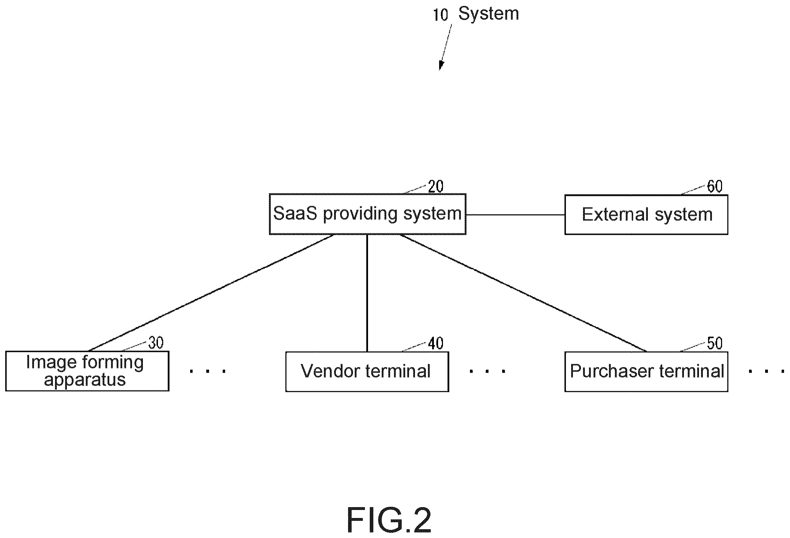

Fig. 2 is a block diagram of an example of a system 10 according to the present embodiment.

As shown in Fig. 2, the system 10 includes a SaaS providing system 20 that provides SaaS. The SaaS providing system 20 may be constituted by a single computer such as a personal computer (PC) or may be constituted by a plurality of computers. The SaaS providing system 20 may be configured on a cloud.

The system 10 includes an image forming apparatus 30 as an electronic apparatus that is used by a purchaser and utilizes SaaS. The system 10 may include at least one image forming apparatus with a configuration similar to that of the image forming apparatus 30 in addition to the image forming apparatus 30. For example, the image forming apparatus may be constituted by a dedicated printer or may be constituted by a multifunction peripheral (MFP).

The system 10 includes a vendor terminal 40 that is used by a vendor. The system 10 may include at least one vendor terminal with a configuration similar to that of the vendor terminal 40 in addition to the vendor terminal 40. For example, the vendor terminal may be constituted by a computer such as a PC.

The system 10 includes a purchaser terminal 50 used by the purchaser. The system 10 may include at least one purchaser terminal with a configuration similar to that of the purchaser terminal 50 in addition to the purchaser terminal 50. For example, the purchaser terminal may be constituted by a mobile terminal such as a smartphone or tablet.

The system 10 includes an external system 60 as a system outside the SaaS providing system 20. The external system 60 may be constituted by a single computer such as a PC or may be constituted by a plurality of computers. The external system 60 may be configured on a cloud. For example, the external system 60 may be constituted by enterprise resource planning (ERP) and customer relationship management (CRM).

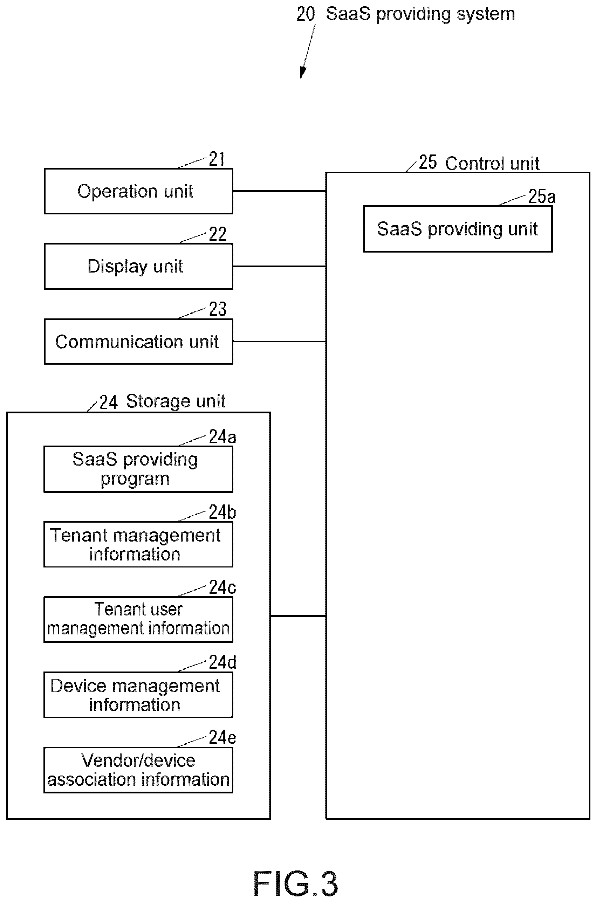

Fig. 3 is a block diagram of an example of the SaaS providing system 20 in a case where it is constituted by a single computer.

As shown in Fig. 3, the SaaS providing system 20 includes an operation unit 21, a display unit 22, a communication unit 23, a storage unit 24, and a control unit 25. The operation unit 21 is an operation device to which various operations are input, such as keyboard and mouse. The display unit 22 is a display device that displays various types of information, such as a liquid crystal display (LCD). The communication unit 23 is a communication device that communicates with an external apparatus via a network, such as a local area network (LAN) or Internet, or directly with a wire or wirelessly without the network. The storage unit 24 is a nonvolatile storage device that stores various types of information, such as a semiconductor memory or a hard disk drive (HDD). The control unit 25 comprehensively controls the SaaS providing system 20.

The storage unit 24 is capable of storing a SaaS providing program 24a for providing SaaS. For example, the SaaS providing program 24a may be installed in the SaaS providing system 20 during the production phase of the SaaS providing system 20. Alternatively, for example, the SaaS providing program 24a may be additionally installed in the SaaS providing system 20 from an external storage medium such as a universal serial bus (USB) memory. Alternatively, for example, the SaaS providing program 24a may be additionally installed in the SaaS providing system 20 from the network.

The storage unit 24 is capable of storing tenant management information 24b for managing tenants in the SaaS providing system 20.

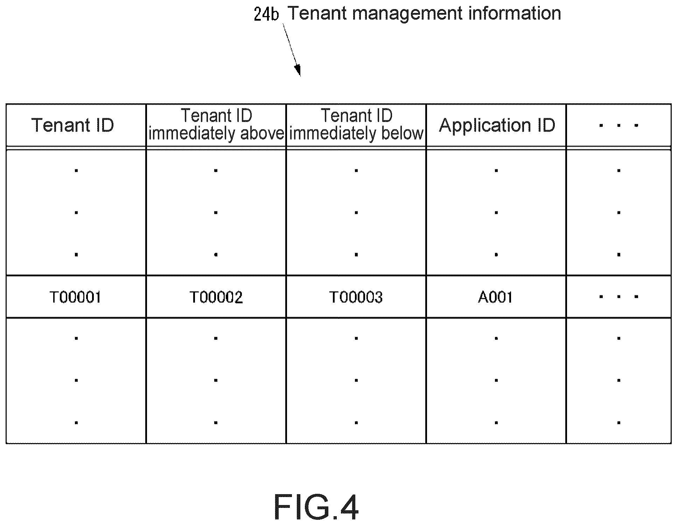

Fig. 4 is a diagram showing an example of the tenant management information 24b.

As shown in Fig. 4, the tenant management information 24b includes, for each tenant, a tenant ID, a tenant ID immediately above, a tenant ID immediately below, and identification information of an application. The tenant ID is identification information of a tenant. The tenant ID immediately above indicates a tenant ID of a tenant immediately above that tenant. The tenant ID immediately below indicates a tenant ID of a tenant immediately below that tenant. The identification information of the application is one of applications of the SaaS provided by the SaaS providing system 20, which is contracted by the tenant (hereinafter, the identification information of the application will be referred to as "application ID"). The tenant management information 24b shown in Fig. 4 is depicted with some information omitted.

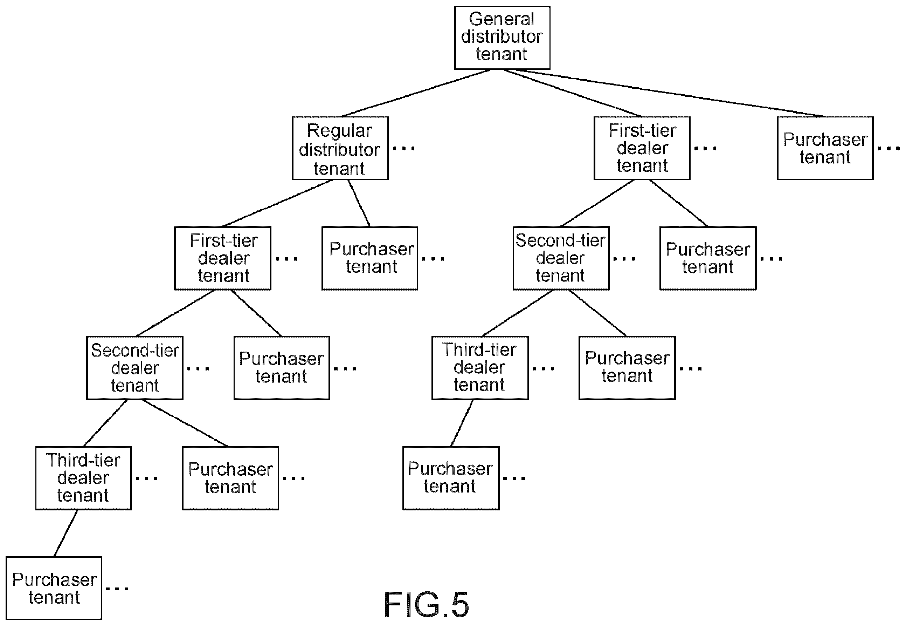

Fig. 5 is a diagram showing an example of a relationship between the tenants in the system 10.

In the example shown in Fig. 5, a general distributor tenant that serves as a tenant of the general distributor is at the highest level. Immediately below the general distributor tenant, there are a tenant of the regular distributor, a tenant of the first-tier dealer, and a tenant of the purchaser. The tenant of the regular distributor is directly managed by the general distributor (hereinafter, the tenant of the regular distributor will be referred to as "regular distributor tenant"). The tenant of the first-tier dealer is directly managed by the general distributor (hereinafter, the tenant of the first-tier dealer will be referred to as "first-tier dealer tenant"). The tenant of the purchaser is directly managed by the general distributor (hereinafter, the tenant of the purchaser will be referred to as "purchaser tenant"). The general distributor tenant, the regular distributor tenant, and the first-tier dealer tenant are tenants of the vendor (hereinafter, referred to as "vendor tenants").

Immediately below the regular distributor tenant, there are a first-tier dealer tenant of the first-tier dealer and a purchaser tenant of the purchaser. The first-tier dealer tenant of the first-tier dealer is directly managed by the regular distributor corresponding to the regular distributor tenant itself. The purchaser tenant of the purchaser is directly managed by a regular distributor corresponding to the regular distributor tenant itself.

Immediately below the first-tier dealer tenant, there are a tenant of the second-tier dealer and a purchaser tenant of the purchaser. The tenant of the second-tier dealer is directly managed by the first-tier dealer corresponding to the first-tier dealer tenant itself (hereinafter, the tenant of the second-tier dealer will be referred to as "second-tier dealer tenant"). The purchaser tenant of the purchaser is directly managed by the first-tier dealer corresponding to the first-tier dealer tenant itself. The second-tier dealer tenant is a vendor tenant.

Immediately below the second-tier dealer tenant, there are a tenant of the third-tier dealer and a purchaser tenant of the purchaser. The tenant of the third-tier dealer is directly managed by the second-tier dealer corresponding to the second-tier dealer tenant itself (hereinafter, the tenant of the third-tier dealer will be referred to as "third-tier dealer tenant"). The purchaser tenant of the purchaser is directly managed by the second-tier dealer corresponding to the second-tier dealer tenant itself. The third-tier dealer tenant is a vendor tenant.

Immediately below the third-tier dealer tenant, there is a purchaser tenant of the purchaser. The purchaser tenant of the purchaser is directly managed by the third-tier dealer corresponding to the third-tier dealer tenant itself.

A user of the vendor tenant is capable of checking information related to a purchaser tenant located immediately below the vendor tenant belonging to the user him or herself, but incapable of checking information related to purchaser tenants not located immediately below the vendor tenant belonging to the user him or herself. For example, even an upper-level vendor is incapable of checking information related to a purchaser tenant located immediately below a vendor tenant of a lower-level vendor.

The relationship between the tenants shown in Fig. 5 corresponds to the relationship between system users corresponding to the tenants (see Fig. 1).

As shown in Fig. 3, the storage unit 24 is capable of storing tenant user management information 24c for managing users of the tenants (hereinafter, referred to as "tenant users").

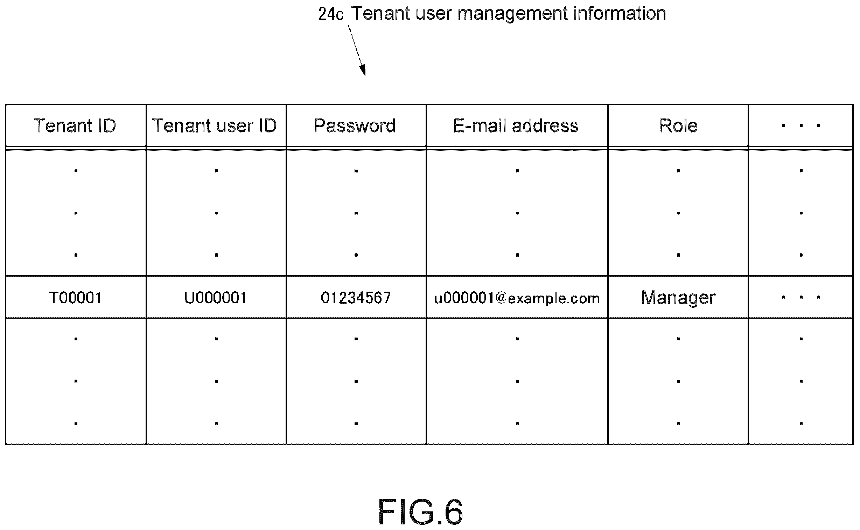

Fig. 6 is a diagram showing an example of the tenant user management information 24c.

As shown in Fig. 6, the tenant user management information 24c includes, for each tenant user, a tenant ID of the tenant to which the tenant user belongs, a tenant user ID that serves as identification information of the tenant user, a password of the tenant user, an e-mail address of the tenant user, and a roll of the tenant user. For example, the roll of the tenant user includes a manager of the tenant and a general user. The tenant user management information 24c shown in Fig. 6 is depicted with some information omitted.

It should be noted that, for example, the general user of the tenant can be added by the manager of this tenant via a web site for this tenant. The web site for the tenant is provided by a SaaS providing unit 25a to be described later.

As shown in Fig. 3, the storage unit 24 is capable of storing device management information 24d that manages the image forming apparatus.

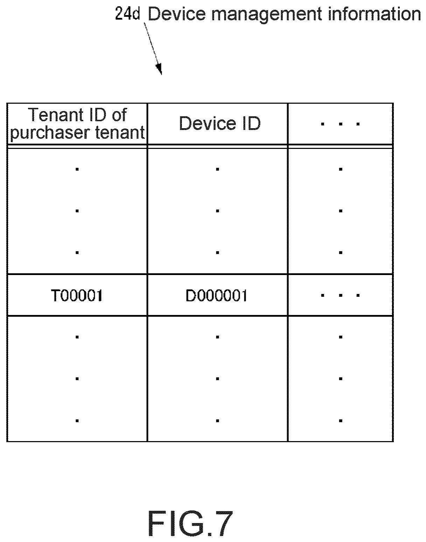

Fig. 7 is a diagram showing an example of the device management information 24d.

As shown in Fig. 7, the device management information 24d includes, for each image forming apparatus, the tenant to which the image forming apparatus belongs, i.e., the tenant **ID** of the purchaser tenant and the device ID of the image forming apparatus. For example, the device ID may be a serial number of the image forming apparatus. The device management information 24d shown in Fig. 7 is depicted with some information omitted.

As shown in Fig. 3, the storage unit 24 is capable of storing vendor/device association information 24e that associates the vendor with the image forming apparatus.

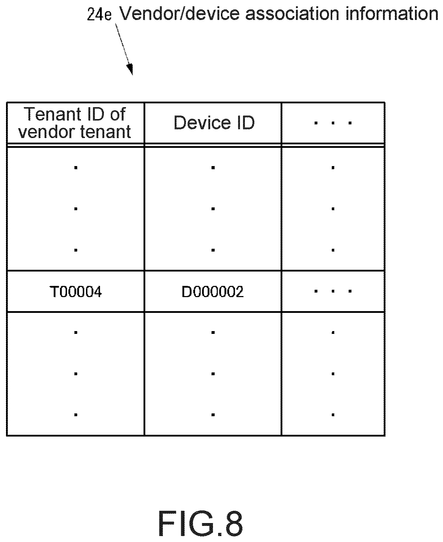

Fig. 8 is a diagram showing an example of the vendor/device association information 24e.

The vendor/device association information 24e shown in Fig. 8 includes, for each vendor, the tenant ID of the vendor tenant and the device ID of the image forming apparatus of the purchaser. The vendor/device association information 24e shown in Fig. 8 is depicted with some information omitted.

For example, the control unit 25 shown in Fig. 3 includes a central processing unit (CPU), a read only memory (ROM) that stores programs and various data, and a random access memory (RAM) as a memory used as a working area for the CPU of the control unit 25. The CPU of the control unit 25 executes the programs stored in the storage unit 24 or the ROM of the control unit 25.

The control unit 25 realizes the SaaS providing unit 25a that provides SaaS by executing the SaaS providing program 24a.

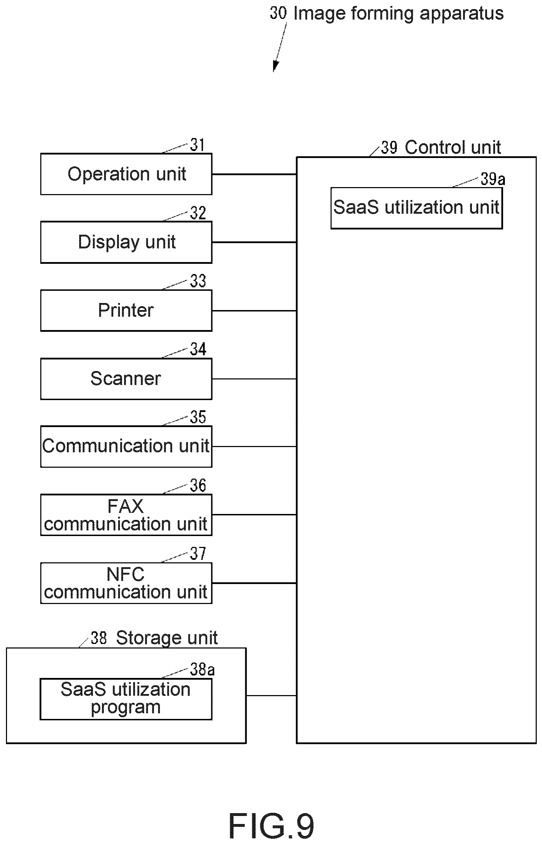

Fig. 9 is a block diagram of an example of the image forming apparatus 30 in a case where it is constituted by an MFP.

As shown in Fig. 9, the image forming apparatus 30 is a computer including an operation unit 31, a display unit 32, a printer 33, a scanner 34, a communication unit 35, a FAX communication unit 36, an NFC communication unit 37, a storage unit 38, and a control unit 39. The operation unit 31 is an operation device in which various operations are input, such as a button. The display unit 32 is a display device that displays various types of information, such as a liquid crystal display (LCD). The printer 33 is a printing device that prints an image on a recording medium such as a paper sheet. The scanner 34 is a reading device that reads an image from an original document. The communication unit 35 is a communication device that communicates with an external apparatus via a network, such as a LAN or Internet, or directly with a wire or wirelessly via the network. The FAX communication unit 36 is a FAX device that performs FAX communication with an external facsimile apparatus (not shown) via a communication line such as a public telephone line. The NFC communication unit 37 performs communication by near field communication (NFC). The storage unit 38 is a nonvolatile storage device that stores various types of information, such as a semiconductor memory or hard disk drive (HDD). The control unit 39 comprehensively controls the image forming apparatus 30.

The storage unit 38 is capable of storing a SaaS utilization program 38a for utilizing the SaaS provided by the SaaS providing system 20 (see Fig. 2). For example, the SaaS utilization program 38a may be installed in the image forming apparatus 30 during the production phase of the image forming apparatus 30. Alternatively, for example, the SaaS utilization program 38a may be additionally installed in the image forming apparatus 30 from an external storage medium such as a USB memory. Alternatively, for example, the SaaS utilization program 38a may be additionally installed in the image forming apparatus 30 from the network.

For example, the control unit 39 includes a CPU, a ROM that stores programs and various data, and a RAM that serves as a memory used as a working area for the CPU of the control unit 39. The CPU of the control unit 39 executes the programs stored in the storage unit 38 or the ROM of the control unit 39.

The control unit 39 realizes a SaaS utilization unit 39a that utilizes the SaaS provided by the SaaS providing system 20 by executing the SaaS utilization program 38a.

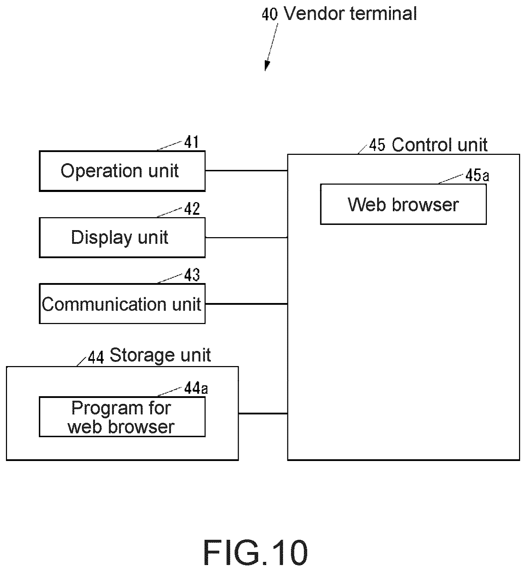

Fig. 10 is a block diagram of an example of the vendor terminal 40.

As shown in Fig. 10, the vendor terminal 40 includes an operation unit 41, a display unit 42, a communication unit 43, a storage unit 44, and a control unit 45. The operation unit 41 is an operation device in which various operations are input, such as keyboard and mouse. The display unit 42 is a display device that displays various types of information, such as a LCD. The communication unit 43 is a communication device that communicates with an external apparatus via a network, such as a LAN or Internet, or directly with a wire or wirelessly via the network. The storage unit 44 is a nonvolatile storage device that stores various types of information, such as a semiconductor memory or HDD. The control unit 45 comprehensively controls the vendor terminal 40.

The storage unit 44 is capable of storing a program 44a for a web browser that serves as a program for a web browser. For example, the program 44a for the web browser may be installed in the vendor terminal 40 during the production phase of the vendor terminal 40 Alternatively, for example, the program 44a for the web browser may be additionally installed in the vendor terminal 40 from an external storage medium such as a USB memory. Alternatively, for example, the program 44a for the web browser may be additionally installed in the vendor terminal 40 from the network.

For example, the control unit 45 includes a CPU, a ROM that stores programs and various data, and a RAM that serves as a memory used as a working area for the CPU of the control unit 45. The CPU of the control unit 45 executes the programs stored in the storage unit 44 or the ROM of the control unit 45.

The control unit 45 realizes a web browser 45a by executing the program 44a for the web browser.

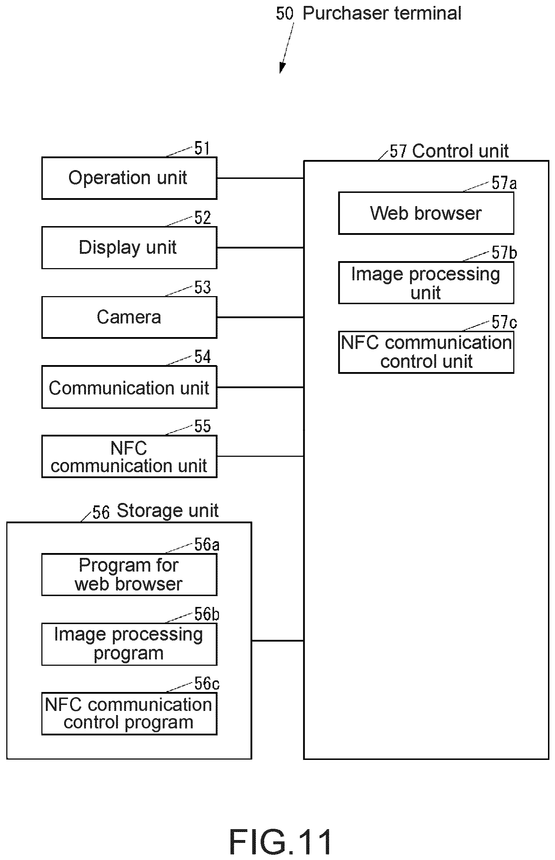

Fig. 11 is a block diagram of an example of the purchaser terminal 50.

As shown in Fig. 11, the purchaser terminal 50 includes an operation unit 51, a display unit 52, a camera 53, a communication unit 54, an NFC communication unit 55, a storage unit 56, and a control unit 57. The operation unit 51 is an operation device in which various operations are input, such as keyboard and mouse. The display unit 52 is a display device that displays various types of information, such as a LCD. The communication unit 54 is a communication device that communicates with an external apparatus via a network, such as a LAN or Internet, or directly with a wire or wirelessly via the network. The NFC communication unit 55 performs communication by NFC. The storage unit 56 is a nonvolatile storage device that stores various types of information, such as a semiconductor memory or HDD. The control unit 57 comprehensively controls the purchaser terminal 50.

The storage unit 56 is capable of storing a program 56a for a web browser that serves as a program for a web browser. For example, the program 56a for the web browser may be installed in the purchaser terminal 50 during the production phase of the purchaser terminal 50. Alternatively, for example, the program 56a for the web browser may be additionally installed in the purchaser terminal 50 from an external storage medium such as a USB memory. Alternatively, for example, the program 56a for the web browser may be additionally installed in the purchaser terminal 50 from the network.

The storage unit 56 is capable of storing an image processing program 56b for processing an image captured by the camera 53. For example, the image processing program 56b may be installed in the purchaser terminal 50 during the production phase of the purchaser terminal 50. Alternatively, for example, the image processing program 56b may be additionally installed in the purchaser terminal 50 from an external storage medium such as a USB memory. Alternatively, for example, the image processing program 56b may be additionally installed in the purchaser terminal 50 from the network.

The storage unit 56 is capable of storing a NFC communication control program 56c for controlling the communication by the NFC communication unit 55. For example, the NFC communication control program 56c may be installed in the purchaser terminal 50 during the production phase of the purchaser terminal 50. Alternatively, for example, the NFC communication control program 56c may be additionally installed in the purchaser terminal 50 from an external storage medium such as a USB memory. Alternatively, for example, the NFC communication control program 56c may be additionally installed in the purchaser terminal 50 from the network.

For example, the control unit 57 includes a CPU, a ROM that stores programs and various data, and a RAM that serves as a memory used as a working area for the CPU of the control unit 57. The CPU of the control unit 57 executes the programs stored in the storage unit 56 or the ROM of the control unit 57.

The control unit 57 realizes a web browser 57a by executing the program 56a for the web browser.

The control unit 57 realizes an image processing unit 57b that processes an image captured by the camera 53 by executing the image processing program 56b.

The control unit 57 realizes an NFC communication control unit 57c that controls the communication by the NFC communication unit 55 by executing the NFC communication control program 56c.

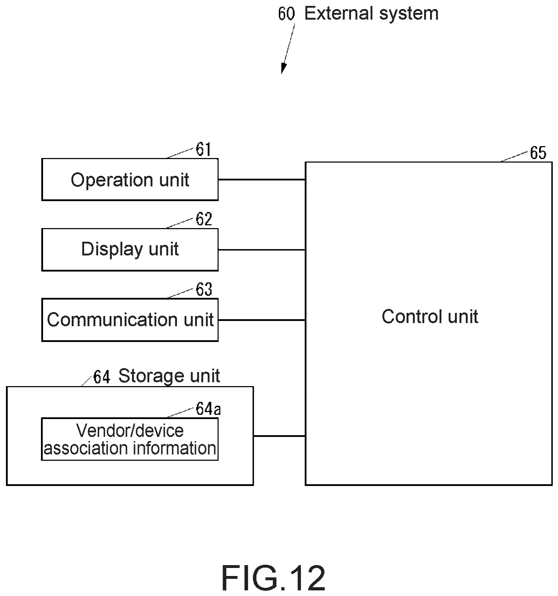

Fig. 12 is a block diagram of an example of the external system 60 in a case where it is constituted by a single computer.

As shown in Fig. 12, the external system 60 includes an operation unit 61, a display unit 62, a communication unit 63, a storage unit 64, and a control unit 65. The operation unit 61 is an operation device in which various operations are input, such as keyboard and mouse. The display unit 62 is a display device that displays various types of information, such as a LCD. The communication unit 63 is a communication device that communicates with an external apparatus via a network, such as a LAN or Internet, or directly with a wire or wirelessly via the network. The storage unit 64 is a nonvolatile storage device that stores various types of information, such as a semiconductor memory or HDD. The control unit 65 comprehensively controls the external system 60.

The storage unit 64 is capable of storing vendor/device association information 64a that associates the vendor with the image forming apparatus. A configuration of the vendor/device association information 64a is similar to the configuration of the vendor/device association information 24e (see Fig. 8).

For example, the control unit 65 includes a CPU, a ROM that stores programs and various data, and a RAM that serves as a memory used as a working area for the CPU of the control unit 65. The CPU of the control unit 65 executes the programs stored in the storage unit 64 or the ROM of the control unit 65.

By the way, in a SaaS providing system in the related art, there is a problem in that in a case where a provider of the SaaS providing system is different from a vendor that sells the SaaS to the purchaser of the SaaS, it is necessary to associate the vendor of the SaaS with the purchaser.

Therefore, it is an objective of the present disclosure to provide a SaaS providing system, a system, an information processing apparatus, and a SaaS providing program which are capable of facilitating the association of the vendor of the SaaS with the purchaser.

Next, an operation of the system 10 will be described.

Hereinafter, the image forming apparatus 30 will be described showing the image forming apparatus as a representative. Similarly, the vendor terminal 40 will be described showing the vendor terminal as a representative. Similarly, the purchaser terminal 50 will be described showing the purchaser terminal as a representative.

First of all, the operation of the system 10 in a case where the device ID is added to the vendor/device association information 24e will be described.

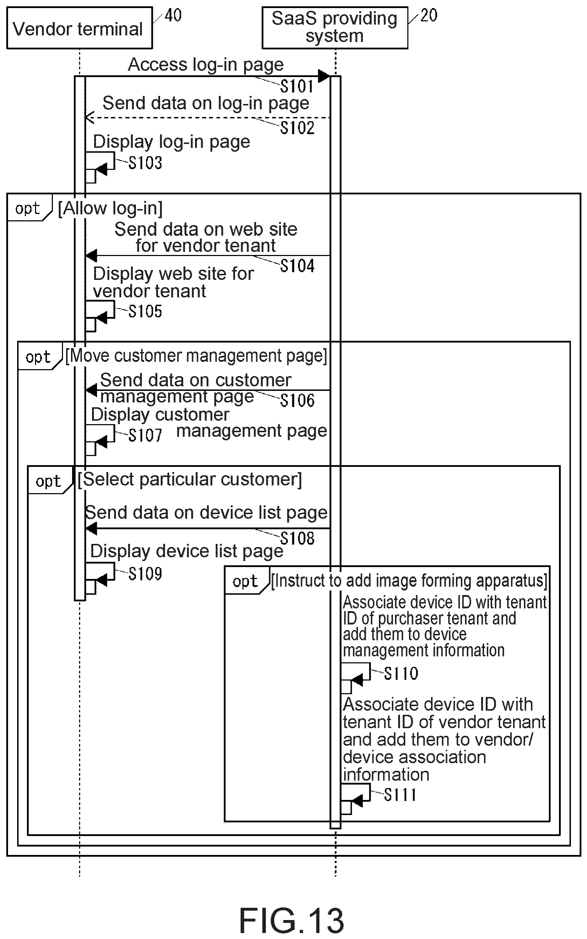

Fig. 13 is a sequence diagram of the operation of the system 10 in a case where the device ID is added to the vendor/device association information 24e.

The vendor is capable of accessing a webpage for log-in (hereinafter, referred to as "log-in page") provided by the SaaS providing unit 25a of the SaaS providing system 20 via the web browser 45a of the vendor terminal 40. That is, as shown in Fig. 13, the web browser 45a of the vendor terminal 40 accesses the log-in page (S101). When the SaaS providing unit 25a of the SaaS providing system 20 receives the access in S101, the SaaS providing unit 25a of the SaaS providing system 20 sends data on the log-in page to the web browser 45a of the vendor terminal 40 (S102). When the web browser 45a of the vendor terminal 40 receives the data sent from the SaaS providing system 20 in S102, the web browser 45a of the vendor terminal 40 displays the log-in page on the display unit 42 of the vendor terminal 40 on the basis of the received data (S103).

The vendor is capable of requesting log-in from the SaaS providing system 20 by inputting the tenant user ID and the password of the vendor itself to the log-in page. The SaaS providing unit 25a of the SaaS providing system 20 allows log-in in a case where the combination of the tenant user ID and the password input in the log-in page is included in the tenant user management information 24c. In a case where the log-in of the vendor via the log-in page is allowed, the SaaS providing unit 25a sends data on the web site for the vendor tenant of the vendor for which the log-in is allowed to the web browser 45a of the vendor terminal 40 (S104). When the web browser 45a of the vendor terminal 40 receives the data sent from the SaaS providing system 20 in S104, the web browser 45a of the vendor terminal 40 displays the web site for the vendor tenant on the display unit 42 of the vendor terminal 40 on the basis of the received data (S105).

On the web site of the vendor tenant of the vendor itself, the vendor is capable of instructing to move a customer management page as a webpage for managing a purchaser that is a customer of the vendor itself via the web browser 45a of the vendor terminal 40. When the SaaS providing unit 25a of the SaaS providing system 20 is instructed to move the customer management page, the SaaS providing unit 25a of the SaaS providing system 20 sends data on the customer management page to the web browser 45a of the vendor terminal 40 (S106). When the web browser 45a of the vendor terminal 40 receives the data sent from the SaaS providing system 20 in S106, the web browser 45a of the vendor terminal 40 displays the customer management page on the display unit 42 of the vendor terminal 40 on the basis of the received data (S107). The customer management page shows a list of customers. The SaaS providing unit 25a of the SaaS providing system 20 puts a customer in the list on the customer management page, the customer corresponding to a purchaser tenant shown in the tenant management information 24b as being a tenant immediately below the vendor tenant of the corresponding vendor on the customer management page.

The vendor is capable of selecting a particular customer from the list of customers on the customer management page. When the particular customer is selected from the list of customers on the customer management page, the SaaS providing unit 25a of the SaaS providing system 20 sends data on a device list page to the web browser 45a of the vendor terminal 40, the device list page serving as a webpage that shows a list of devices ID of image forming apparatuses associated with the tenant ID of the purchaser tenant of the selected customer in the device management information 24d (S108). When the web browser 45a of the vendor terminal 40 receives the data sent from the SaaS providing system 20 in S108, the web browser 45a of the vendor terminal 40 displays the device list page on the display unit 42 of the vendor terminal 40 on the basis of the received data (S109).

The vendor is capable of instructing to add an image forming apparatus by inputting the device ID of the image forming apparatus wished to be added on the device list page. For example, in a case where the vendor has sold an image forming apparatus to the purchaser, the vendor is capable of grasping the device ID of the image forming apparatus sold to the purchaser. When the SaaS providing unit 25a of the SaaS providing system 20 is instructed to add the image forming apparatus on the device list page, the SaaS providing unit 25a of the SaaS providing system 20 associates the device ID input in the device list page with the tenant ID of the corresponding purchaser tenant on the device list page and adds them to the device management information 24d (S110). When the processing in S110 ends, the SaaS providing unit 25a of the SaaS providing system 20 associates the device ID added to the device management information 24d in S110 with the tenant ID of the vendor tenant of the corresponding vendor on the device list page and adds them to the vendor/device association information 24e (S111).

Next, an operation of the system 10 in a case where a purchaser tenant is generated via a screen for generating the purchaser tenant displayed by the image forming apparatus 30 (hereinafter, referred to as "tenant generation screen") will be described.

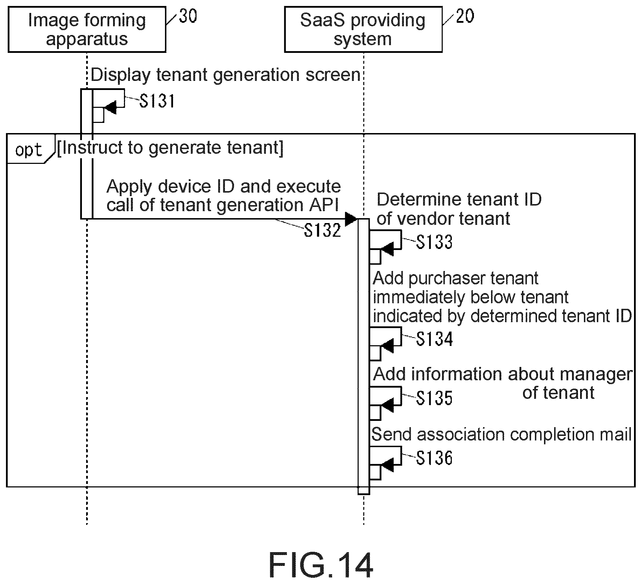

Fig. 14 is a sequence diagram of the operation of the system 10 in a case where the purchaser tenant is generated via the tenant generation screen displayed by the image forming apparatus 30.

The purchaser is capable of instructing the SaaS utilization unit 39a of the image forming apparatus 30 to display the tenant generation screen via the operation unit 31 of the image forming apparatus 30. When the SaaS utilization unit 39a of the image forming apparatus 30 is instructed to display the tenant generation screen, the SaaS utilization unit 39a of the image forming apparatus 30 displays the tenant generation screen on the display unit 32 as shown in Fig. 14 (S131).

The purchaser is capable of instructing to generate a tenant via the tenant generation screen after values for various items required to generate the tenant are input in the tenant generation screen. The items required to generate the tenant include information about a manager of the tenant. The information about the manager of the tenant includes an e-mail address of the manager of the tenant. When the SaaS utilization unit 39a of the image forming apparatus 30 is instructed to generate the tenant via the tenant generation screen, the SaaS utilization unit 39a of the image forming apparatus 30 applies the device ID of the image forming apparatus 30 itself and executes a call of a tenant generation API that serves as an application programming interface (API) for generating a tenant (S132). The SaaS providing unit 25a of the SaaS providing system 20 provides the tenant generation API. The SaaS utilization unit 39a of the image forming apparatus 30 applies various values input in the tenant generation screen to the call of the tenant generation API in S132.

When the SaaS providing unit 25a of the SaaS providing system 20 receives the call of the tenant generation API in S132, the SaaS providing unit 25a of the SaaS providing system 20 determines the tenant ID of the vendor tenant, which is associated in the vendor/device association information 24e with the device ID applied to the call of the tenant generation API in S132 (S133).

When the processing in S133 ends, the SaaS providing unit 25a adds the purchaser tenant according to various values applied to the call of the tenant generation API in S132 to the tenant management information 24b so that this purchaser tenant is located immediately below the tenant indicated by the tenant ID determined in S133 (S134). With the processing in S134, the association of the purchaser tenant generated in S134 with the vendor tenant immediately above this purchaser tenant, i.e., the association of the purchaser corresponding to the purchaser tenant generated in S134 with the vendor that has sold the SaaS to this purchaser, is completed.

When the processing in S134 ends, the SaaS providing unit 25a associates the information about the manager of the tenant applied to the call of the tenant generation API in S132 with the tenant ID of the purchaser tenant generated in S134 and adds them to the tenant user management information 24c (S135).

When the processing in S135 ends, the SaaS providing unit 25a sends an e-mail (hereinafter, referred to as "association completion mail") for notifying of the completion of the association of the purchaser with the vendor that has sold the SaaS to this purchaser to the e-mail address of the manager of the purchaser tenant of this purchaser (S136). The e-mail address of the manager of the purchaser tenant is included in the tenant user management information 24c. The manager of the purchaser tenant can recognize the completion of the association of the purchaser with the vendor that has sold the SaaS to this purchaser to which the manager him or herself belongs by receiving the association completion mail. Therefore, for example, in a case where the general user can utilize all or some functions of a particular application of the SaaS provided by the SaaS providing unit 25a only after the manager makes particular settings for this application, it is possible to increase the possibility that the manager early makes particular settings for this application.

Next, an operation of the system 10 in a case where the purchaser tenant is generated via the tenant generation site accessed by the purchaser terminal 50 by the purchaser terminal 50 reading a code image that shows information including the URL of a web site for generating the purchaser tenant (hereinafter, referred to as "tenant generation site") will be described.

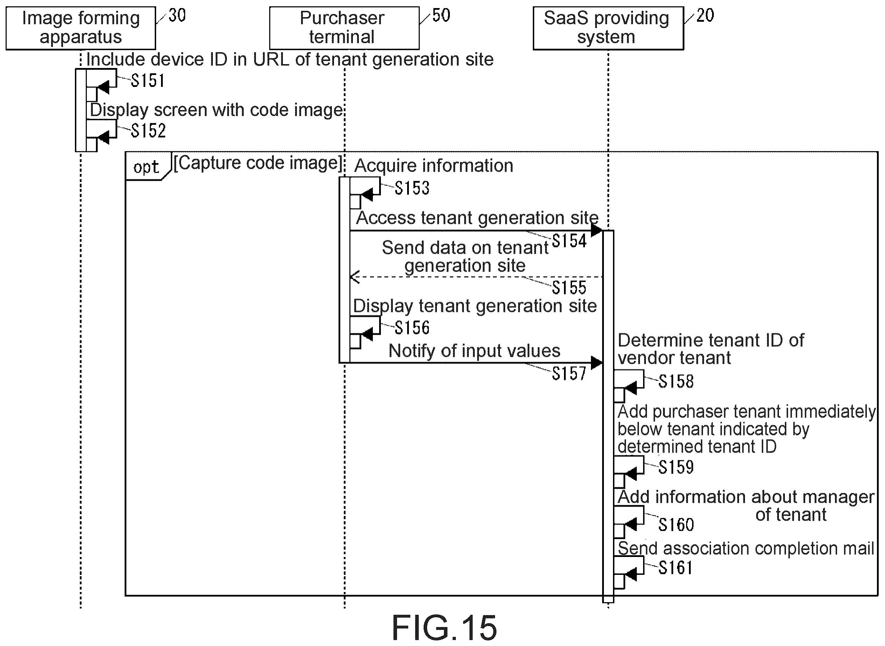

Fig. 15 is a sequence diagram of the operation of the system 10 in a case where the purchaser tenant is generated via the tenant generation site accessed by the purchaser terminal 50 by the purchaser terminal 50 reading the code image that shows the information including the URL of the tenant generation site.

When the SaaS utilization unit 39a of the image forming apparatus 30 receives the input of a particular operation via the operation unit 31 of the image forming apparatus 30, the SaaS utilization unit 39a of the image forming apparatus 30 includes the device ID of the image forming apparatus 30 itself as additional information in the URL of the tenant generation site as shown in Fig. 15 (S151). For example, the particular operation may be an operation for starting the execution of a particular application of the SaaS provided by the SaaS providing system 20.

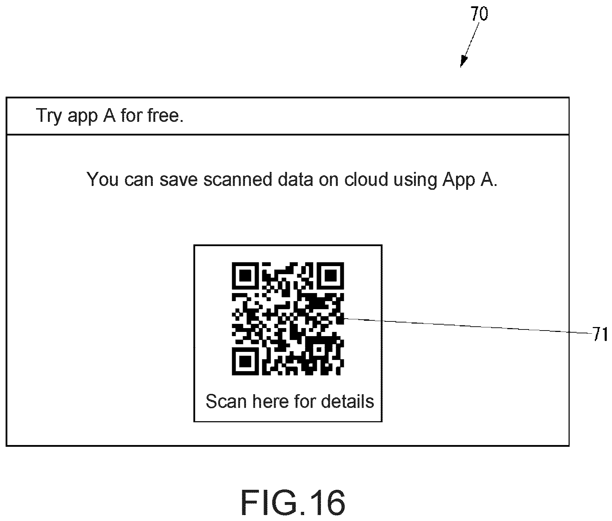

When the processing in S151 ends, the SaaS utilization unit 39a displays on the display unit 32 a screen 70 with the code image (e.g., see Fig. 16) that serves as a screen including the code image that shows the information including the URL in which the device ID has been included in S151 (S152). Here, for example, the screen 70 with the code image may be a screen that introduces the SaaS provided by the SaaS providing system 20. In a case where the screen 70 with the code image is a screen related to the particular application of the SaaS provided by the SaaS providing system 20, the SaaS utilization unit 39a may include the application ID of this application as additional information in the URL included in the information shown by the code image to be included in the screen 70 with the code image. It should be noted that for example, a QR code (registered trademark) may be employed as the code image.

Fig. 16 is a diagram showing an example of the screen 70 with the code image displayed in the operation shown in Fig. 15.

The screen 70 with the code image shown in Fig. 16 is a screen that introduces "app A" that is an application of the SaaS provided by the SaaS providing system 20. That is, the screen 70 with the code image is a screen related to the "app A." The screen 70 with the code image includes a code image 71 that shows the information including the URL in which the device ID has been included in S151.

The purchaser is capable of capturing the code image displayed in S152 with the camera 53 of the purchaser terminal 50. When the camera 53 of the purchaser terminal 50 captures the code image, the image processing unit 57b of the purchaser terminal 50 acquires information indicated by the code image captured with the camera 53 of the purchaser terminal 50 as shown in Fig. 15 (S153).

When the processing in S153 ends, the image processing unit 57b of the purchaser terminal 50 instructs the web browser 57a to access the URL of the tenant generation site included in the information acquired in S153. Therefore, the web browser 57a of the purchaser terminal 50 accesses the URL of the tenant generation site including the device ID of the image forming apparatus 30 (S154).

When the SaaS providing unit 25a of the SaaS providing system 20 receives the access in S154, the SaaS providing unit 25a of the SaaS providing system 20 sends data on the tenant generation site to the web browser 57a of the purchaser terminal 50 (S155).

When the web browser 57a of the purchaser terminal 50 receives the data sent from the SaaS providing system 20 in S155, the web browser 57a of the purchaser terminal 50 displays the tenant generation site on the display unit 52 of the purchaser terminal 50 on the basis of the received data (S156).

The purchaser is capable of instructing to generate a tenant via the tenant generation site after inputting values for various items required to generate the tenant to the tenant generation site. The items required to generate the tenant include information about a manager of the tenant. The information about the manager of the tenant includes an e-mail address of the manager of the tenant. When the web browser 57a of the purchaser terminal 50 is instructed to generate the tenant via the tenant generation site, the web browser 57a of the purchaser terminal 50 notifies the SaaS providing system 20 of the various values input in the tenant generation site (S157).

When the SaaS providing unit 25a of the SaaS providing system 20 receives the notification in S157, the SaaS providing unit 25a of the SaaS providing system 20 determines the tenant ID of the vendor tenant, which is associated in the vendor/device association information 24e with the device ID included in the URL accessed in S154 (S158).

When the processing in S158 ends, the SaaS providing unit 25a adds the purchaser tenant according to the various values notified in S157 to the tenant management information 24b so that this purchaser tenant is located immediately below the tenant indicated by the tenant ID determined in S158 (S159). With the processing in S159, the association of the purchaser tenant generated in S159 with the vendor tenant immediately above this purchaser tenant, i.e., the association of the purchaser corresponding to the purchaser tenant generated in S159 with the vendor that has sold the SaaS to this purchaser, is completed. It should be noted that in a case where the URL accessed in S154 includes the application ID, the SaaS providing unit 25a may associate this application ID with this purchaser tenant and add them to the tenant management information 24b when the SaaS providing unit 25a adds the purchaser tenant to the tenant management information 24b in S159.

When the processing in S159 ends, the SaaS providing unit 25a associates the information about the manager of the tenant notified in S157 with the tenant ID of the purchaser tenant generated in S159 and adds them to the tenant user management information 24c (S160).

When the processing in S160 ends, the SaaS providing unit 25a sends an association completion mail for notifying of the completion of the association of the purchaser with the vendor that has sold the SaaS to this purchaser to the e-mail address of the manager of the purchaser tenant of this purchaser (S161). The e-mail address of the manager of the purchaser tenant is included in the tenant user management information 24c. The manager of the purchaser tenant can recognize the completion of the association of the purchaser with the vendor that has sold the SaaS to this purchaser to which the manager him or herself belongs by receiving the association completion mail. Therefore, for example, in a case where the general user can utilize all or some functions of a particular application of the SaaS provided by the SaaS providing unit 25a only after the manager makes particular settings for this application, it is possible to increase the possibility that the manager early makes particular settings for this application.

Next, an operation of the system 10 in a case where the purchaser tenant is generated via the tenant generation site accessed by the purchaser terminal 50 by the purchaser terminal 50 receiving the information including the URL of the tenant generation site by NFC will be described.

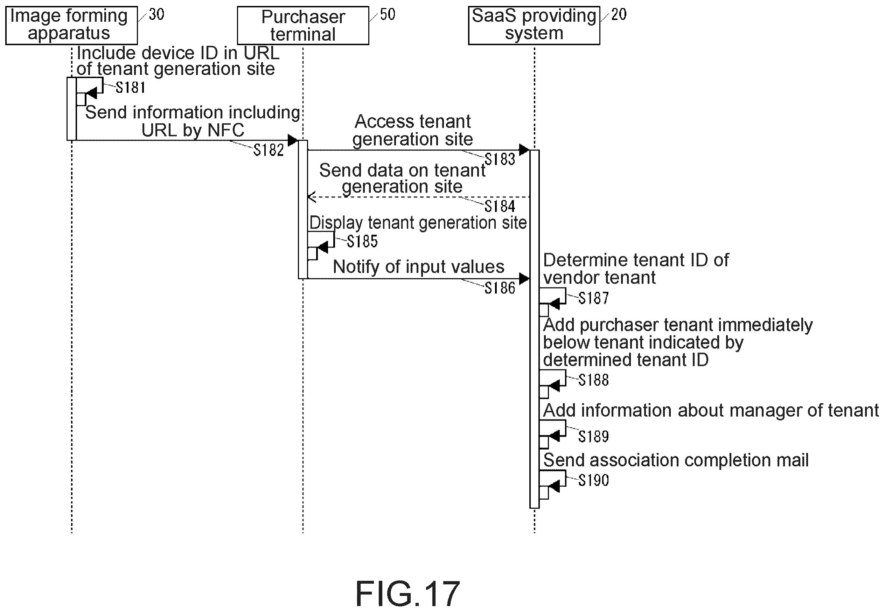

Fig. 17 is a sequence diagram of the operation of the system 10 in a case where the purchaser tenant is generated via the tenant generation site accessed by the purchaser terminal 50 by the purchaser terminal 50 receiving the information including the URL of the tenant generation site by NFC.

The purchaser is capable of causing NFC-based communication to be performed between the NFC communication unit 55 of the purchaser terminal 50 and the NFC communication unit 37 of the image forming apparatus 30 by moving the NFC communication unit 55 of the purchaser terminal 50 closer to the NFC communication unit 37 of the image forming apparatus 30. When the NFC-based communication is performed between the NFC communication unit 55 of the purchaser terminal 50 and the NFC communication unit 37 of the image forming apparatus 30, the SaaS utilization unit 39a of the image forming apparatus 30 includes the device ID of the image forming apparatus 30 itself as additional information in the URL of the tenant generation site as shown in Fig. 17 (S181).

When the processing in S181 ends, the SaaS utilization unit 39a sends the information including the URL in which the device ID has been included in S181 to the purchaser terminal 50 by NFC (S182).

When the NFC communication control unit 57c of the purchaser terminal 50 receives the information sent from the image forming apparatus 30 by NFC in S182, the NFC communication control unit 57c of the purchaser terminal 50 instructs the web browser 57a to access the URL of the tenant generation site included in the received information. Therefore, the web browser 57a of the purchaser terminal 50 accesses the URL of the tenant generation site including the device ID of the image forming apparatus 30 (S183).

When the SaaS providing unit 25a of the SaaS providing system 20 receives the access in S183, the SaaS providing unit 25a of the SaaS providing system 20 sends data on the tenant generation site to the web browser 57a of the purchaser terminal 50 (S184).

When the web browser 57a of the purchaser terminal 50 receives the data sent from the SaaS providing system 20 in S184, the web browser 57a of the purchaser terminal 50 displays the tenant generation site on the display unit 52 of the purchaser terminal 50 on the basis of the received data (S185).

The purchaser is capable of instructing to generate a tenant via the tenant generation site after inputting values for various items required to generate the tenant to the tenant generation site. The items required to generate the tenant include information about a manager of the tenant. The information about the manager of the tenant includes an e-mail address of the manager of the tenant. When the web browser 57a of the purchaser terminal 50 is instructed to generate the tenant via the tenant generation site, the web browser 57a of the purchaser terminal 50 notifies the SaaS providing system 20 of the various values input in the tenant generation site (S186).

When the SaaS providing unit 25a of the SaaS providing system 20 receives the notification in S186, the SaaS providing unit 25a of the SaaS providing system 20 determines the tenant ID of the vendor tenant, which is associated in the vendor/device association information 24e with the device ID included in the URL accessed in S183 (S187).

When the processing in S187 ends, the SaaS providing unit 25a adds the purchaser tenant according to the various values notified in S186 to the tenant management information 24b so that this purchaser tenant is located immediately below the tenant indicated by the tenant ID determined in S187 (S188). With the processing in S188, the association of the purchaser tenant generated in S188 with the vendor tenant immediately above this purchaser tenant, i.e., the association of the purchaser corresponding to the purchaser tenant generated in S188 with the vendor that has sold the SaaS to this purchaser, is completed.

When the processing in S188 ends, the SaaS providing unit 25a associates the information about the manager of the tenant notified in S186 with the tenant ID of the purchaser tenant generated in S188 and adds them to the tenant user management information 24c (S189).

When the processing in S189 ends, the SaaS providing unit 25a sends an association completion mail for notifying of the completion of the association of the purchaser with the vendor that has sold the SaaS to this purchaser to the e-mail address of the manager of the purchaser tenant of this purchaser (S190). The e-mail address of the manager of the purchaser tenant is included in the tenant user management information 24c. The manager of the purchaser tenant can recognize the completion of the association of the purchaser with the vendor that has sold the SaaS to this purchaser to which the manager him or herself belongs by receiving the association completion mail. Therefore, for example, in a case where the general user can utilize all or some functions of a particular application of the SaaS provided by the SaaS providing unit 25a only after the manager makes particular settings for this application, it is possible to increase the possibility that the manager early makes particular settings for this application.

It should be noted that hereinabove, the SaaS providing system 20 refers to the vendor/device association information 24e of the SaaS providing system 20 itself in S133 (see Fig. 14), S158 (see Fig. 15), and S187 (see Fig. 17). However, in S133, S158, and S187, the SaaS providing system 20 may refer to the vendor/device association information 64a of the external system 60, not the vendor/device association information 24e of the SaaS providing system 20 itself. In a case where the SaaS providing system 20 does not refer to the vendor/device association information 24e of the SaaS providing system 20 itself, the operation shown in Fig. 13 can be omitted.

As described above, in the SaaS providing system 20, the purchaser itself is capable of making an instruction to generate a purchaser tenant.

In a case where an instruction to generate the purchaser tenant is provided from the outside (S132, S157, S186) and the device ID of the image forming apparatus 30 that is used by the purchaser and utilizes SaaS is notified from the outside (S132, S154, S183), the SaaS providing system 20 generates the purchaser tenant in association with the vendor associated with the device ID notified from the outside in the vendor/device association information 24e or the vendor/device association information 64a (S133 to S134, S158 to S159, S187 to S188). It is thus possible to facilitate the association of the vendor of the SaaS with the purchaser.

The SaaS providing system 20 generates the purchaser tenant in association with the vendor associated with the device ID notified from the outside in the vendor/device association information 24e or the vendor/device association information 64a. It is thus possible to reduce the possibility that the vendor of the SaaS is accidentally associated with the purchaser.

In a case where the purchaser tenant has been generated in association with the vendor, the SaaS providing system 20 notifies the manager of the purchaser tenant that the purchaser tenant has been generated in association with the vendor (S136, S161, S190). It is thus possible to enhance the convenience.

In the system 10, the image forming apparatus 30 itself displays the screen 70 with the code image including the code image 71 that shows the URL including the device ID of the image forming apparatus 30 (S152) and the purchaser terminal 50 acquires the URL shown by the code image 71 by the purchaser terminal 50 capturing the code image 71 (S153). It is thus possible to enhance the convenience.

In a case where an instruction to generate the purchaser tenant is provided from the purchaser terminal 50 to the SaaS providing system 20 (S157) and the device ID of the image forming apparatus 30 and the application ID of the application of the SaaS are notified from the purchaser terminal 50 to the SaaS providing system 20 (S154), the system 10 generates the purchaser tenant in association with the vendor, which is associated in the vendor/device association information 24e or the vendor/device association information 64a with the device ID notified from the purchaser terminal 50 to the SaaS providing system 20, and with the application ID notified from the purchaser terminal 50 to the SaaS providing system 20 (S159). It is thus possible to facilitate the association of the vendor of the application of the SaaS with the purchaser.

In the system 10, the purchaser terminal 50 acquires the URL including the device ID of the image forming apparatus 30 from the image forming apparatus 30 itself by NFC (S182). It is thus possible to enhance the convenience.

### Second Embodiment

First of all, a relationship between system users of a system according to a second embodiment of the present disclosure will be described.

As shown in Fig. 1, the relationship between the system users of the system according to the present embodiment is similar to the relationship between the system users of the system according to the first embodiment.

Next, a configuration of the system according to the present embodiment will be described.

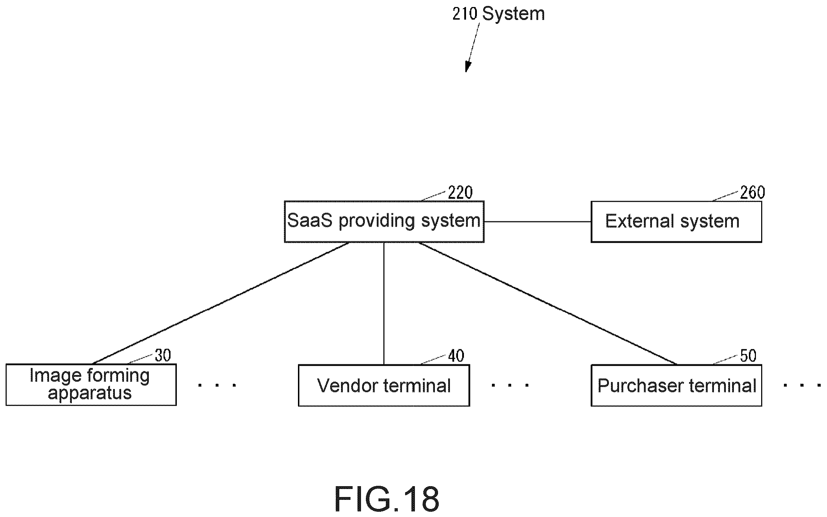

Fig. 18 is a block diagram of an example of a system 210 according to the present embodiment.

Components of the system 210 shown in Fig. 18 are similar to the components of the system 10 according to the first embodiment (see Fig. 2) except for components to be described below. Some of the components of the system 210, which are similar to the components of the system 10, will be denoted by the same reference signs as the components of the system 10 and detailed descriptions will be omitted.

The configuration of the system 210 is similar to a configuration in which the system 10 includes a SaaS providing system 220 and an external system 260 in place of the SaaS providing system 20 (see Fig. 2) and the external system 60 (see Fig. 2).

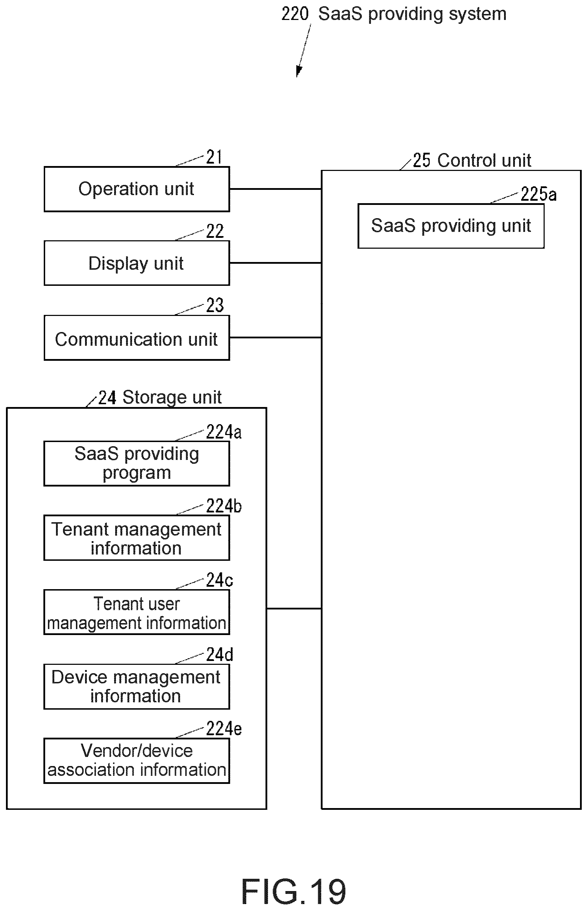

Fig. 19 is a block diagram of an example of the SaaS providing system 220 in a case where it is constituted by a single computer.

The configuration of the SaaS providing system 220 shown in Fig. 19 is similar to a configuration in which the SaaS providing system 20 (see Fig. 3) stores a SaaS providing program 224a, tenant management information 224b, and vendor/device association information 224e in the storage unit 24 in place of the SaaS providing program 24a (see Fig. 3), the tenant management information 24b (see Fig. 3), and the vendor/device association information 24e (see Fig. 3).

The control unit 25 realizes a SaaS providing unit 225a that provides SaaS by executing the SaaS providing program 224a.

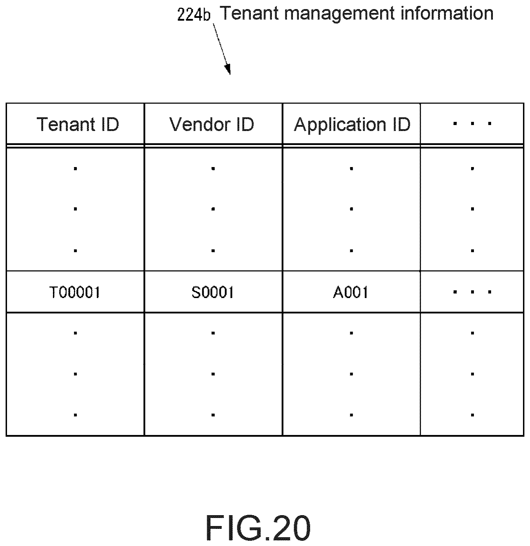

Fig. 20 is a diagram showing an example of the tenant management information 224b.

As shown in Fig. 20, the tenant management information 224b includes, for each tenant, a tenant ID that serves as identification information of the tenant, identification information of a vendor that has sold SaaS to a purchaser corresponding to a purchaser tenant itself (hereinafter, the identification information of the vendor will be referred to as "vendor ID") in a case where the tenant is the purchaser tenant, and an application ID of one of applications of the SaaS provided by the SaaS providing system 220, which is contracted by the tenant. The tenant management information 224b shown in Fig. 20 is depicted with some information omitted.

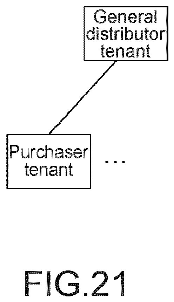

Fig. 21 is a diagram showing an example of a relationship between the tenants of the system 210.

In the example shown in Fig. 21, the general distributor tenant is at the highest level. There are all purchaser tenants immediately below the general distributor tenant. In the system 210, there are not vendor tenants other than the general distributor tenant, such as a regular distributor tenant, a first-tier dealer tenant, a second-tier dealer tenant, and a third-tier dealer tenant. That is, the relationship between the tenants shown in Fig. 21 is different from a relationship between system users (see Fig. 1) corresponding to the tenants.

In the present embodiment, the vendors other than the general distributor do not include the vendor tenant of the vendor itself. The vendors other than the general distributor are general users of the general distributor tenant.

The user of the general distributor tenant is capable of checking information related to the purchaser tenant associated with the vendor ID of the user him or herself, but incapable of checking the information related to the purchaser tenant not associated with the vendor ID of the user him or herself. For example, even an upper-level vendor is incapable of checking information related to the purchaser tenant associated with a vendor ID of a lower-level vendor.

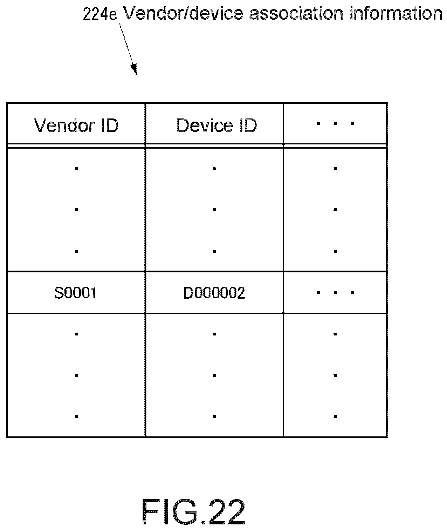

Fig. 22 is a diagram showing an example of the vendor/device association information 224e.

The vendor/device association information 224e shown in Fig. 22 includes, for each vendor, the vendor ID and the device ID of the image forming apparatus of the purchaser. The vendor/device association information 224e shown in Fig. 22 is depicted with some information omitted.

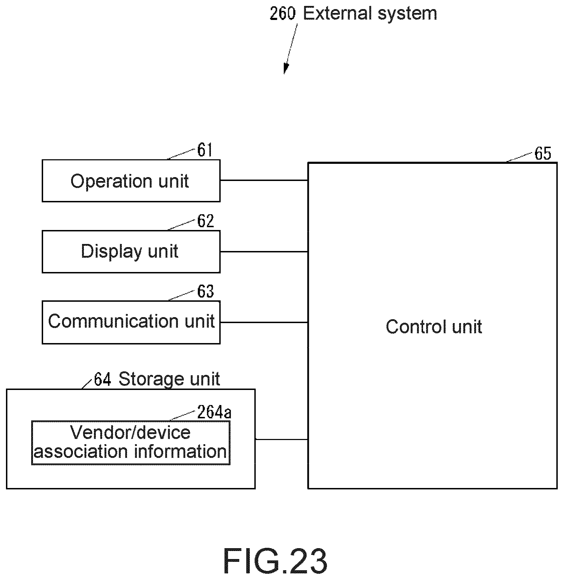

Fig. 23 is a block diagram of an example of the external system 260 in a case where it is constituted by a single computer.

A configuration of the external system 260 shown in Fig. 23 is similar to a configuration in which the external system 60 (see Fig. 12) stores vendor/device association information 264a in place of the vendor/device association information 64a (see Fig. 12) in the storage unit 64.

A configuration of the vendor/device association information 264a is a configuration similar to the vendor/device association information 224e (see Fig. 22).

Next, an operation of the system 210 will be described.

Hereinafter, the image forming apparatus 30 will be described showing the image forming apparatus as a representative. Similarly, the vendor terminal 40 will be described showing the vendor terminal as a representative. Similarly, the purchaser terminal 50 will be described showing the purchaser terminal as a representative.

First of all, the operation of the system 210 in a case where the device ID is added to the vendor/device association information 224e will be described.

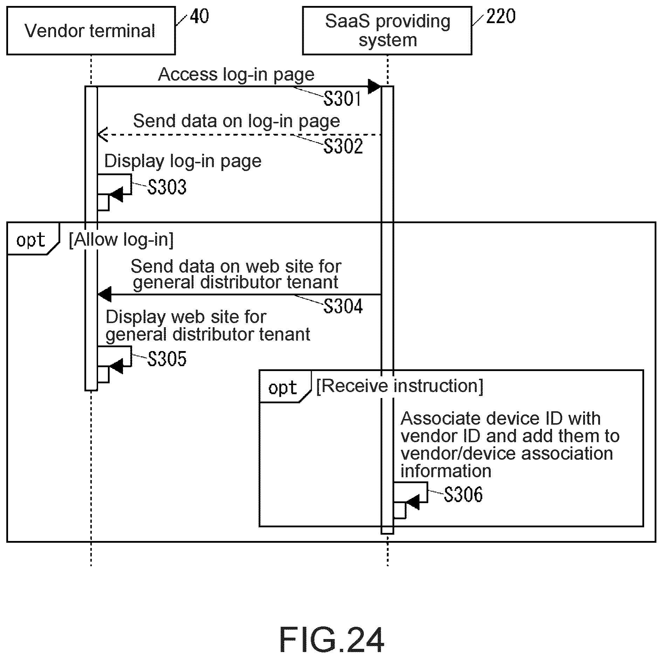

Fig. 24 is a sequence diagram of the operation of the system 210 in a case where the device ID is added to the vendor/device association information 224e.

The vendor is capable of accessing a log-in page provided by the SaaS providing unit 225a of the SaaS providing system 220 via the web browser 45a of the vendor terminal 40. That is, as shown in Fig. 24, the web browser 45a of the vendor terminal 40 accesses the log-in page (S301). When the SaaS providing unit 225a of the SaaS providing system 220 receives the access in S301, the SaaS providing unit 225a of the SaaS providing system 220 sends data on the log-in page to the web browser 45a of the vendor terminal 40 (S302). When the web browser 45a of the vendor terminal 40 receives the data sent from the SaaS providing system 220 in S302, the web browser 45a of the vendor terminal 40 displays the log-in page on the display unit 42 of the vendor terminal 40 on the basis of the received data (S303).

The vendor is capable of requesting log-in from the SaaS providing system 220 by inputting the tenant user ID and the password of the vendor itself into the log-in page. In a case where the combination of the tenant user ID and the password input in the log-in page is included in the tenant user management information 24c, the SaaS providing unit 25a of the SaaS providing system 20 allows log-in. In a case where the log-in of the vendor via the log-in page is allowed, the SaaS providing unit 225a of the SaaS providing system 220 sends data on a web site for the general distributor tenant to the web browser 45a of the vendor terminal 40 (S304). When the web browser 45a of the vendor terminal 40 receives the data sent from the SaaS providing system 220 in S304, the web browser 45a of the vendor terminal 40 displays the web site for the general distributor tenant on the display unit 42 of the vendor terminal 40 on the basis of the received data (S305).

In the web site of the general distributor tenant, the vendor is capable of instructing to associate the device ID of the image forming apparatus sold by the vendor itself to the purchaser with the vendor ID of the vendor itself and add them to the vendor/device association information 224e. When the SaaS providing unit 225a of the SaaS providing system 220 receives the instruction by the vendor, the SaaS providing unit 225a of the SaaS providing system 220 associates the instructed device ID with the instructed vendor ID and adds them to the vendor/device association information 224e (S306).

Next, an operation of the system 210 in a case where the purchaser tenant is generated via the tenant generation screen for generating the purchaser tenant, which is displayed by the image forming apparatus 30, will be described.

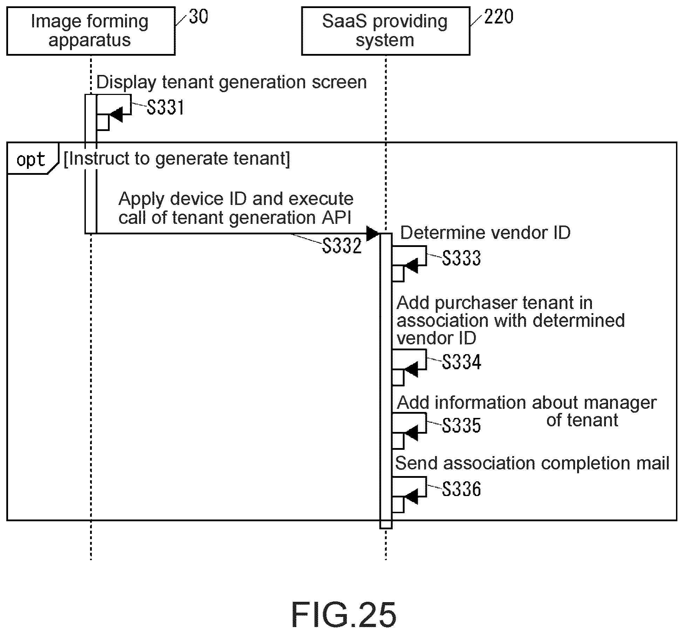

Fig. 25 is a sequence diagram of the operation of the system 210 in a case where the purchaser tenant is generated via the tenant generation screen displayed by the image forming apparatus 30.

The purchaser is capable of instructing the SaaS utilization unit 39a of the image forming apparatus 30 to display the tenant generation screen via the operation unit 31 of the image forming apparatus 30. When the SaaS utilization unit 39a of the image forming apparatus 30 is instructed to display the tenant generation screen, the SaaS utilization unit 39a of the image forming apparatus 30 displays the tenant generation screen on the display unit 32 as shown in Fig. 25 (S331).

The purchaser is capable of instructing to generate a tenant via the tenant generation screen after values for various items required to generate the tenant are input in the tenant generation screen. The items required to generate the tenant include information about a manager of the tenant. The information about the manager of the tenant includes an e-mail address of the manager of the tenant. When the SaaS utilization unit 39a of the image forming apparatus 30 is instructed to generate the tenant via the tenant generation screen, the SaaS utilization unit 39a of the image forming apparatus 30 applies the device ID of the image forming apparatus 30 itself and executes a call of a tenant generation API for generating the tenant (S332). The SaaS providing unit 225a of the SaaS providing system 220 provides the tenant generation API. The SaaS utilization unit 39a of the image forming apparatus 30 applies various values input in the tenant generation screen to the call of the tenant generation API in S332.

When the SaaS providing unit 225a of the SaaS providing system 220 receives the call of the tenant generation API in S332, the SaaS providing unit 225a of the SaaS providing system 220 determines the vendor ID, which is associated in the vendor/device association information 224e with the device ID applied to the call of the tenant generation API in S332 (S333).

When the processing in S333 ends, the SaaS providing unit 225a associates the purchaser tenant according to various values applied to the call of the tenant generation API in S332 with the vendor ID determined in S333 and adds them to the tenant management information 224b (S334). With the processing in S334, the association of the purchaser tenant generated in S334 with the vendor, i.e., the association of the purchaser corresponding to the purchaser tenant generated in S334 with the vendor that has sold the SaaS to this purchaser, is completed.

When the processing in S334 ends, the SaaS providing unit 225a associates the information about the manager of the tenant applied to the call of the tenant generation API in S332 with the tenant ID of the purchaser tenant generated in S334 and adds them to the tenant user management information 24c (S335).

When the processing in S335 ends, the SaaS providing unit 225a sends an association completion mail for notifying of the completion of the association of the purchaser with the vendor that has sold the SaaS to this purchaser to the e-mail address of the manager of the purchaser tenant of this purchaser (S336). The e-mail address of the manager of the purchaser tenant is included in the tenant user management information 24c. The manager of the purchaser tenant can recognize the completion of the association of the purchaser with the vendor that has sold the SaaS to this purchaser to which the manager him or herself belongs by receiving the association completion mail. Therefore, for example, in a case where the general user can utilize all or some functions of a particular application the SaaS provided by the SaaS providing unit 225a only after the manager makes particular settings for this application, it is possible to increase the possibility that the manager early makes particular settings for this application.

Next, an operation of the system 210 in a case where the purchaser tenant is generated via the tenant generation site accessed by the purchaser terminal 50 by the purchaser terminal 50 reading the code image that shows the information including the URL of the tenant generation site for generating the purchaser tenant will be described.

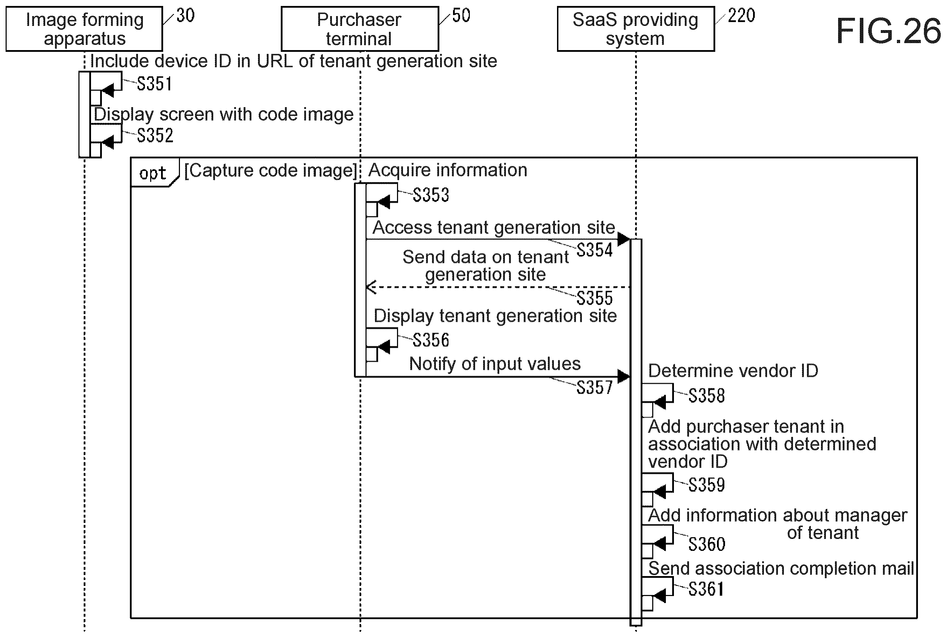

Fig. 26 is a sequence diagram of the operation of the system 210 in a case where the purchaser tenant is generated via the tenant generation site accessed by the purchaser terminal 50 by the purchaser terminal 50 reading the code image that shows the information including the URL of the tenant generation site.

When the SaaS utilization unit 39a of the image forming apparatus 30 receives the input of a particular operation via the operation unit 31 of the image forming apparatus 30, the SaaS utilization unit 39a of the image forming apparatus 30 includes the device ID of the image forming apparatus 30 itself as additional information in the URL of the tenant generation site as shown in Fig. 26 (S351). For example, the particular operation may be an operation for starting the execution of the particular application of the SaaS provided by the SaaS providing system 220.

When the processing in S351 ends, the SaaS utilization unit 39a displays the screen 70 with the code image (e.g., see Fig. 16) as a screen including the code image that shows the information including the URL in which the device ID has been included in S351 on the display unit 32 (S352). Here, for example, the screen 70 with the code image may be a screen that introduces the SaaS provided by the SaaS providing system 220. In a case where the screen 70 with the code image is a screen related to the particular application of the SaaS provided by the SaaS providing system 220, the SaaS utilization unit 39a may include the application ID of this application as additional information in the URL included in the information shown by the code image to be included in the screen 70 with the code image. It should be noted that for example, a QR code (registered trademark) may be employed as the code image.

The purchaser is capable of capturing the code image displayed in S352 with the camera 53 of the purchaser terminal 50. When the camera 53 of the purchaser terminal 50 captures the code image, the image processing unit 57b of the purchaser terminal 50 acquires information indicated by the code image captured with the camera 53 of the purchaser terminal 50 (S353).

When the processing in S353 ends, the image processing unit 57b of the purchaser terminal 50 instructs the web browser 57a to access the URL of the tenant generation site included in the information acquired in S353. Therefore, the web browser 57a of the purchaser terminal 50 accesses the URL of the tenant generation site including the device ID of the image forming apparatus 30 (S354).

When the SaaS providing unit 225a of the SaaS providing system 220 receives the access in S354, the SaaS providing unit 225a of the SaaS providing system 220 sends data on the tenant generation site to the web browser 57a of the purchaser terminal 50 (S355).

When the web browser 57a of the purchaser terminal 50 receives the data sent from the SaaS providing system 220 in S355, the web browser 57a of the purchaser terminal 50 displays the tenant generation site on the display unit 52 of the purchaser terminal 50 on the basis of the received data (S356).

The purchaser is capable of instructing to generate a tenant via the tenant generation site after inputting values for various items required to generate the tenant to the tenant generation site. The items required to generate the tenant include information about a manager of the tenant. The information about the manager of the tenant includes an e-mail address of the manager of the tenant. When the web browser 57a of the purchaser terminal 50 is instructed to generate the tenant via the tenant generation site, the web browser 57a of the purchaser terminal 50 notifies the SaaS providing system 220 of various values input in the tenant generation site (S357).

When the SaaS providing unit 225a of the SaaS providing system 220 receives the notification in S357, the SaaS providing unit 225a of the SaaS providing system 220 determines the vendor ID, which is associated in the vendor/device association information 224e with the device ID included in the URL accessed in S354 (S358).

When the processing in S358 ends, the SaaS providing unit 225a associates the purchaser tenant according to the various values notified in S357 with the vendor ID determined in S358 and adds them to the tenant management information 224b (S359). With the processing in S359, the association of the purchaser tenant generated in S359 with the vendor, i.e., the association of the purchaser corresponding to the purchaser tenant generated in S359 with the vendor that has sold the SaaS to this purchaser, is completed. It should be noted that in a case where the URL accessed in S354 includes the application ID, the SaaS providing unit 225a may associate this application ID with this purchaser tenant and add them to the tenant management information 224b when the SaaS providing unit 225a adds the purchaser tenant to the tenant management information 224b in S359.

When the processing in S359 ends, the SaaS providing unit 225a associates the information about the manager of the tenant notified in S357 with the tenant ID of the purchaser tenant generated in S359 and adds them to the tenant user management information 24c (S360).

When the processing in S360 ends, the SaaS providing unit 225a sends an association completion mail for notifying of the completion of the association of the purchaser with the vendor that has sold the SaaS to this purchaser to the e-mail address of the manager of the purchaser tenant of this purchaser (S361). The e-mail address of the manager of the purchaser tenant is included in the tenant user management information 24c. The manager of the purchaser tenant can recognize the completion of the association of the purchaser with the vendor that has sold the SaaS to this purchaser to which the manager him or herself belongs by receiving the association completion mail. Therefore, for example, in a case where the general user can utilize all or some functions of a particular application the SaaS provided by the SaaS providing unit 225a only after the manager makes particular settings for this application, it is possible to increase the possibility that the manager early makes particular settings for this application.

Next, an operation of the system 210 in a case where the purchaser tenant is generated by the purchaser terminal 50 receiving the information including the URL of the tenant generation site by NFC via the tenant generation site accessed by the purchaser terminal 50 will be described.

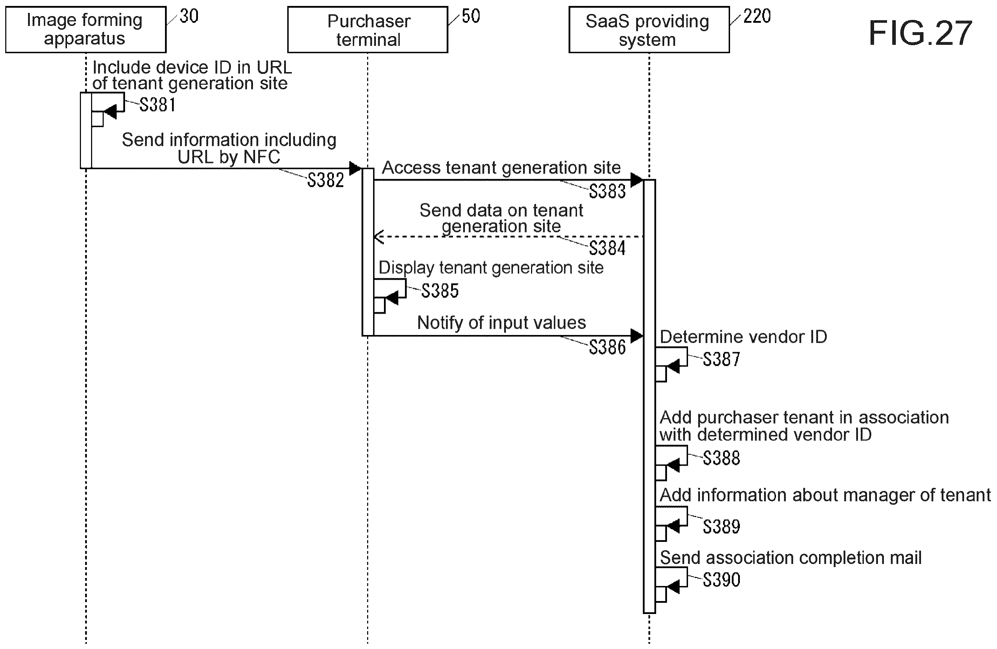

Fig. 27 is a sequence diagram of the operation of the system 210 in a case where the purchaser tenant is generated by the purchaser terminal 50 receiving the information including the URL of the tenant generation site by NFC via the tenant generation site accessed by the purchaser terminal 50.

The purchaser is capable of causing NFC-based communication to be performed between the NFC communication unit 55 of the purchaser terminal 50 and the NFC communication unit 37 of the image forming apparatus 30 by moving the NFC communication unit 55 of the purchaser terminal 50 closer to the NFC communication unit 37 of the image forming apparatus 30. When the NFC-based communication is performed between the NFC communication unit 55 of the purchaser terminal 50 and the NFC communication unit 37 of the image forming apparatus 30, the SaaS utilization unit 39a of the image forming apparatus 30 includes the device ID of the image forming apparatus 30 itself as additional information in the URL of the tenant generation site as shown in Fig. 27 (S381).

When the processing in S381 ends, the SaaS utilization unit 39a sends the information including the URL in which the device ID has been included in S381 to the purchaser terminal 50 by NFC (S382).

When the NFC communication control unit 57c of the purchaser terminal 50 receives the information sent from the image forming apparatus 30 by NFC in S382, the NFC communication control unit 57c of the purchaser terminal 50 instructs the web browser 57a to access the URL of the tenant generation site included in the received information. Therefore, the web browser 57a of the purchaser terminal 50 accesses the URL of the tenant generation site including the device ID of the image forming apparatus 30 (S383).

When the SaaS providing unit 225a of the SaaS providing system 220 receives the access in S383, the SaaS providing unit 225a of the SaaS providing system 220 sends data on the tenant generation site to the web browser 57a of the purchaser terminal 50 (S384).

When the web browser 57a of the purchaser terminal 50 receives the data sent from the SaaS providing system 220 in S384, the web browser 57a of the purchaser terminal 50 displays the tenant generation site on the display unit 52 of the purchaser terminal 50 on the basis of the received data (S385).

The purchaser is capable of instructing to generate a tenant via the tenant generation site after inputting values for various items required to generate the tenant to the tenant generation site. The items required to generate the tenant include information about a manager of the tenant. The information about the manager of the tenant includes an e-mail address of the manager of the tenant. When the web browser 57a of the purchaser terminal 50 is instructed to generate the tenant via the tenant generation site, the web browser 57a of the purchaser terminal 50 notifies the SaaS providing system 220 of various values input in the tenant generation site (S386).

When the SaaS providing unit 225a of the SaaS providing system 220 receives the notification in S386, the SaaS providing unit 225a of the SaaS providing system 220 determines the vendor ID, which is associated in the vendor/device association information 224e with the device ID included in the URL accessed in S383 (S387).

When the processing in S387 ends, the SaaS providing unit 225a associates the purchaser tenant according to the various values notified in S386 with the vendor ID determined in S387 and adds them to the tenant management information 224b (S388). With the processing in S388, the association of the purchaser tenant generated in S388 with the vendor, i.e., the association of the purchaser corresponding to the purchaser tenant generated in S388 with the vendor that has sold the SaaS to this purchaser, is completed.

When the processing in S388 ends, the SaaS providing unit 225a associates the information about the manager of the tenant notified in S386 with the tenant ID of the purchaser tenant generated in S388 and adds them to the tenant user management information 24c (S389).

When the processing in S389 ends, the SaaS providing unit 225a sends an association completion mail for notifying of the completion of the association of the purchaser with the vendor that has sold the SaaS to this purchaser to the e-mail address of the manager of the purchaser tenant of this purchaser (S390). The e-mail address of the manager of the purchaser tenant is included in the tenant user management information 24c. The manager of the purchaser tenant can recognize the completion of the association of the purchaser with the vendor that has sold the SaaS to this purchaser to which the manager him or herself belongs by receiving the association completion mail. Therefore, for example, in a case where the general user can utilize all or some functions of a particular application the SaaS provided by the SaaS providing unit 225a only after the manager makes particular settings for this application, it is possible to increase the possibility that the manager early makes particular settings for this application.

It should be noted that hereinabove, the SaaS providing system 220 refers to the vendor/device association information 224e of the SaaS providing system 220 itself in S333 (see Fig. 25), S358 (see Fig. 26), and S387 (see Fig. 27). However, the SaaS providing system 220 may refer to the vendor/device association information 264a of the external system 260, not the vendor/device association information 224e of the SaaS providing system 220 itself, in S333, S358, and S387. In a case where the SaaS providing system 220 does not refer to the vendor/device association information 224e of the SaaS providing system 220 itself, the operation shown in Fig. 24 can be omitted.

As described above, in the SaaS providing system 220, the purchaser itself is capable of making an instruction to generate a purchaser tenant.

In a case where an instruction to generate the purchaser tenant is provided from the outside (S332, S357, S386) and the device ID of the image forming apparatus 30 that is used by the purchaser and utilizes SaaS is notified from the outside (S332, S354, S383), the SaaS providing system 220 generates the purchaser tenant in association with the vendor associated with the device ID notified from the outside in the vendor/device association information 224e or vendor/device association information 264e (S333 to S334, S358 to S359, S387 to S388). It is thus possible to facilitate the association of the vendor of the SaaS with the purchaser.

The SaaS providing system 220 generates the purchaser tenant in association with the vendor associated with the device ID notified from the outside in the vendor/device association information 224e or vendor/device association information 264e. It is thus possible to reduce the possibility that the vendor of the SaaS is accidentally associated with the purchaser.

In a case where the purchaser tenant has been generated in association with the vendor, the SaaS providing system 220 notifies the manager of the purchaser tenant that the purchaser tenant has been generated in association with the vendor (S336, S361, S390). It is thus possible to enhance the convenience.

In the system 210, the image forming apparatus 30 itself displays the screen 70 with the code image including the code image 71 that shows the URL including the device ID of the image forming apparatus 30 (S352) and the purchaser terminal 50 acquires the URL shown by the code image 71 by the purchaser terminal 50 capturing the code image 71 (S353). It is thus possible to enhance the convenience.

In a case where an instruction to generate the purchaser tenant is provided from the purchaser terminal 50 to the SaaS providing system 220 (S357) and the device ID of the image forming apparatus 30 and the application ID of the application of the SaaS are notified from the purchaser terminal 50 to the SaaS providing system 220 (S354), the system 210 generates the purchaser tenant in association with the vendor, which is associated in the vendor/device association information 224e or vendor/device association information 264e with the device ID notified from the purchaser terminal 50 to the SaaS providing system 220, and with the application ID notified from the purchaser terminal 50 to the SaaS providing system 220 (S359). It is thus possible to facilitate the association of the vendor of the application of the SaaS with the purchaser.

In the system 210, the purchaser terminal 50 acquires the URL including the device ID of the image forming apparatus 30 from the image forming apparatus 30 itself by NFC (S382). It is thus possible to enhance the convenience.

In each of the above-mentioned embodiments, the case where the electronic apparatus that is used by the purchaser and utilizes SaaS is an image forming apparatus has been described. However, the electronic apparatus that is used by the purchaser and utilizes SaaS may be an electronic apparatus other than the image forming apparatus, such as a tablet.

AS described above, in a case where the instruction to generate the purchaser tenant is provided from the outside and the device ID of the electronic apparatus that is used by the purchaser and utilizes the SaaS is notified from the outside, the SaaS providing system according to the present disclosure generates the purchaser tenant in association with the vendor associated with the device ID notified from the outside in the vendor/device association information. It is thus possible to facilitate the association of the vendor of the SaaS with the purchaser.

In a case where the SaaS providing system according to the present disclosure generates the purchaser tenant in association with the vendor, the SaaS providing system notifies the manager of the purchaser tenant that the SaaS providing system generates the purchaser tenant in association with the vendor. It is thus possible to enhance the convenience.

In a case where the instruction to generate the purchaser tenant is provided from the electronic apparatus to the SaaS providing system and the device ID of the electronic apparatus is notified from the electronic apparatus itself to the SaaS providing system, the system according to the present disclosure generates the purchaser tenant in association with the vendor associated with the device ID notified from the electronic apparatus in the vendor/device association information. It is thus possible to facilitate the association of the vendor of the SaaS with the purchaser.

In a case where the instruction to generate the purchaser tenant is provided from the purchaser terminal to the SaaS providing system and the device ID of the electronic apparatus is notified from the purchaser terminal to the SaaS providing system, the system according to the present disclosure generates the purchaser tenant in association with the vendor associated with the device ID notified from the purchaser terminal in the vendor/device association information. It is thus possible to facilitate the association of the vendor of the SaaS with the purchaser.

In the system according to the present disclosure, the electronic apparatus itself displays the screen with the code image including the code image that shows the URL including the device ID of the electronic apparatus and the purchaser terminal acquires the URL indicated by the code image by the purchaser terminal capturing the code image. It is thus possible to enhance the convenience.

In a case where the instruction to generate the purchaser tenant is provided from the purchaser terminal to the SaaS providing system and the device ID of the electronic apparatus and the application ID of the application of the SaaS are notified from the purchaser terminal to the SaaS providing system, the system according to the present disclosure generates the purchaser tenant in association with the vendor and the application ID notified from the purchaser terminal, the vendor being associated with the device ID notified from the purchaser terminal in the vendor/device association information. It is thus possible to facilitate the association of the vendor of the application of the SaaS with the purchaser.

In the system according to the present disclosure, the purchaser terminal acquires the URL including the device ID of the electronic apparatus by near field communication from the electronic apparatus itself. It is thus possible to enhance the convenience.

In a case where the instruction to generate the purchaser tenant is provided from the outside and the device ID of the electronic apparatus that is used by the purchaser and utilizes the SaaS is notified from the outside, the information processing apparatus according to the present disclosure generates the purchaser tenant in association with the vendor associated with the device ID notified from the outside in the vendor/device association information. It is thus possible to facilitate the association of the vendor of the SaaS with the purchaser.

In a case where the instruction to generate the purchaser tenant is provided from the outside and the device ID of the electronic apparatus that is used by the purchaser and utilizes the SaaS is notified from the outside, the computer that executes the SaaS providing program according to the present disclosure generates the purchaser tenant in association with the vendor associated with the device ID notified from the outside in the vendor/device association information. It is thus possible to facilitate the association of the vendor of the SaaS with the purchaser.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. A software as a service (SaaS) providing system (20), comprising
a SaaS providing unit (25a) that provides SaaS, wherein
in a case where an instruction to generate a purchaser tenant that serves as a tenant of a purchaser of the SaaS is provided from outside the SaaS providing system (20) and a device identifier (ID) that serves as identification information of an electronic apparatus that is used by the purchaser and utilizes the SaaS is notified from the outside, the SaaS providing unit (25a) generates the purchaser tenant in association with a vendor associated with the device ID notified from the outside in vendor/device association information (24e) that associates the vendor of the SaaS with the device ID.

2. The SaaS providing system (20) according to claim 1, wherein
in a case where the SaaS providing unit (25a) generates the purchaser tenant in association with the vendor, the SaaS providing unit (25a) notifies a manager of the purchaser tenant that the SaaS providing unit (25a) generates the purchaser tenant in association with the vendor.

3. A system (10), comprising:
a software as a service (SaaS) providing system (20) including a SaaS providing unit (25a) that provides SaaS; and
an electronic apparatus that is used by a purchaser of the SaaS and utilizes the SaaS, wherein
the electronic apparatus instructs the SaaS providing system (20) to generate a purchaser tenant that serves as a tenant of the purchaser and notifies the SaaS providing system (20) of a device identifier (ID) that serves as identification information of the electronic apparatus itself, and
in a case where an instruction to generate the purchaser tenant is provided from the electronic apparatus and the device ID is notified from the electronic apparatus, the SaaS providing unit (25a) generates the purchaser tenant in association with a vendor associated with the device ID notified from the electronic apparatus in vendor/device association information (24e) that associates the vendor of the SaaS with the device ID.

4. A system (10), comprising:
a software as a service (SaaS) providing system (20) including a SaaS providing unit (25a) that provides SaaS;
an electronic apparatus that is used by a purchaser of the SaaS and utilizes the SaaS; and
a purchaser terminal (50) that is used by the purchaser, wherein
the electronic apparatus includes a device identifier (ID) that serves as identification information of the electronic apparatus in a uniform resource locator (URL) of a tenant generation site that serves as a web site for generating a purchaser tenant that serves as a tenant of the purchaser, the device ID being included as additional information,
the purchaser terminal (50) acquires the URL including the device ID from the electronic apparatus and accesses the URL acquired from the electronic apparatus, thereby instructing the SaaS providing system (20) to generate the purchaser tenant via the tenant generation site and notifying the SaaS providing system (20) of the device ID included in the URL, and
in a case where an instruction to generate the purchaser tenant is provided from the purchaser terminal (50) and the device ID is notified from the purchaser terminal (50), the SaaS providing unit (25a) generates the purchaser tenant in association with a vendor associated with the device ID notified from the purchaser terminal (50) in vendor/device association information (24e) that associates the vendor of the SaaS with the device ID.

5. The system (10) according to claim 4, wherein
the electronic apparatus displays a screen (70) with a code image as a screen including the code image that shows the URL including the device ID, and
the purchaser terminal (50) acquires the URL shown by the code image by capturing the code image.

6. The system (10) according to claim 5, wherein
in a case where the screen (70) with the code image is a screen related to a particular application of the SaaS, the electronic apparatus includes an application ID that serves as particular identification information of the application in the URL, the application ID being included as additional information,
the purchaser terminal (50) acquires the URL including the device ID and the application ID from the electronic apparatus and accesses the URL acquired from the electronic apparatus, thereby instructing the SaaS providing system (20) to generate the purchaser tenant via the tenant generation site and notifying the SaaS providing system (20) of the device ID included in the URL and the application ID, and
in a case where an instruction to generate the purchaser tenant is provided from the purchaser terminal (50) and the device ID and the application ID are notified from the purchaser terminal (50), the SaaS providing unit (25a) generates the purchaser tenant in association with the vendor and the application ID notified from the purchaser terminal (50), the vendor being associated with the device ID notified from the purchaser terminal (50) in the vendor/device association information (24e).

7. The system (10) according to claim 4, wherein
the purchaser terminal (50) acquires the URL including the device ID from the electronic apparatus by near field communication.

8. An information processing apparatus, comprising
a software as a service (SaaS) providing unit (25a) that provides SaaS, wherein
in a case where an instruction to generate a purchaser tenant that serves as a tenant of a purchaser of the SaaS is provided from outside the information processing apparatus and a device identifier (ID) that serves as identification information of an electronic apparatus that is used by the purchaser and utilizes the SaaS is notified from the outside, the SaaS providing unit (25a) generates the purchaser tenant in association with a vendor associated with the device ID notified from the outside in vendor/device association information (24e) that associates the vendor of the SaaS with the device ID.

9. A service (SaaS) providing program, which causes a computer to realize
a SaaS providing unit (25a) that provides SaaS, wherein
in a case where an instruction to generate a purchaser tenant that serves as a tenant of a purchaser of the SaaS is provided from outside the computer and a device identifier (ID) that serves as identification information of an electronic apparatus that is used by the purchaser and utilizes the SaaS is notified from the outside, the SaaS providing unit (25a) generates the purchaser tenant in association with a vendor associated with the device ID notified from the outside in vendor/device association information (24e) that associates the vendor of the SaaS with the device ID.
